(19) Europäisches Patentamt
European Patent Office
Office européen des brevets

(11) Veröffentlichungsnummer: **0 457 729 B1**

# (12) EUROPÄISCHE PATENTSCHRIFT

(45) Veröffentlichungstag der Patentschrift: **21.06.95**

(51) Int. Cl.$^{6}$: **C09B 31/068**, C09B 67/22

(21) Anmeldenummer: **91810357.3**

(22) Anmeldetag: **08.05.91**

Die Akte enthält technische Angaben, die nach dem Eingang der Anmeldung eingereicht wurden und die nicht in dieser Patentschrift enthalten sind.

(54) **Azofarbstoffe, Verfahren zu deren Herstellung und deren Verwendung.**

(30) Priorität: **18.05.90 CH 1700/90**

(43) Veröffentlichungstag der Anmeldung:
**21.11.91 Patentblatt 91/47**

(45) Bekanntmachung des Hinweises auf die Patenterteilung:
**21.06.95 Patentblatt 95/25**

(84) Benannte Vertragsstaaten:
**BE CH DE ES FR GB IT LI**

(56) Entgegenhaltungen:
**EP-A- 0 152 765**
**DE-A- 1 923 680**
**US-A- 3 034 848**

**The Chemistry of Synthetic Dyes, vol.VIII, K.Venkataraman, Ed.**

(73) Patentinhaber: **CIBA-GEIGY AG**
**Klybeckstrasse 141**
**CH-4002 Basel (CH)**

(72) Erfinder: **Hurter, Rudolf**
**Laufenburgerstrasse 10/3**
**CH-4058 Basel (CH)**

**EP 0 457 729 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Azofarbstoffe, Verfahren zu deren Herstellung und Verwendung dieser Farbstoffe zum Färben und Bedrucken von Fasermaterialien, insbesondere textilen Fasermaterialien.

Gegenstand der vorliegenden Erfindung sind Azofarbstoffe der Formel

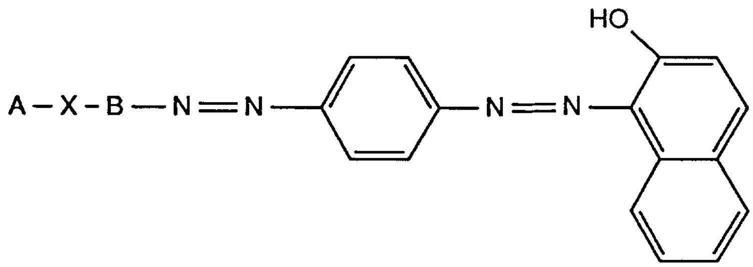

(1),

worin A und B unabhängig voneinander gegebenenfalls substituiertes Phenyl oder Naphthyl sind, X $-N(R_1)-SO_2-$, $-O-SO_2-$ oder $-SO_2-N(R_1)-$ ist und $R_1$ Wasserstoff oder $C_1$-$C_8$-Alkyl bedeutet, wobei der Farbstoff der Formel (1) eine oder zwei Sulfogruppen enthält, die in den Resten A und/oder B enthalten sind.

Aus der EP-A-152,765 und der DE-A-1,923,680 sind Farbstoffe bekannt, welche im Unterschied zu den erfindungsgemässen Farbstoffen im Phenylenrest und/oder im Naphtholrest weitere Substituenten enthalten.

Als Substituenten der Reste A und B kommen unabhängig voneinander z.B. Alkylgruppen mit 1 bis 8, vorzugsweise 1 bis 4 Kohlenstoffatomen, wie z.B. Methyl, Aethyl, Propyl, Isopropyl, Butyl, Isobutyl, sek.-Butyl, tert.-Butyl, Pentyl, Hexyl, Heptyl, Octyl, Alkoxygruppen mit 1 bis 8 Kohlenstoffatomen, insbesondere 1 bis 4 Kohlenstoffatomen, wie z.B. Methoxy, Aethoxy, Propoxy, Isopropoxy, Butoxy, Acylaminogruppen wie Alkanoylaminogruppen mit 2 bis 8 Kohlenstoffatomen und Alkoxycarbonylaminogruppen mit 2 bis 8 Kohlenstoffatomen, wie z.B. Acetylamino, Propionylamino, Methoxycarbonylamino, Aethoxycarbonylamino, Alkanoylgruppen mit 2 bis 8, vorzugsweise 2 bis 4 Kohlenstoffatomen, wie z.B. Acetyl, Propionyl, Butyryl oder Isobutyryl, gegebenenfalls durch $C_1$-$C_8$-Alkyl, $C_1$-$C_8$-Alkoxy, Halogen, Carboxy oder Sulfo weitersubstituiertes Phenylaminosulfonyl oder Naphthylaminosulfonyl, Nitro, Cyan, Trifluormethyl, Halogen, wie Fluor, Brom oder insbesondere Chlor, Carbamoyl, Sulfamoyl, Ureido, Hydroxy, Carboxy, Sulfo oder Sulfato in Betracht.

Als $C_1$-$C_8$-Alkyl kommt für $R_1$ in Formel (1) z.B. Methyl, Aethyl, Propyl, Isopropyl, Butyl, Isobutyl, sek.-Butyl, tert.-Butyl, Pentyl, Hexyl, Heptyl oder Octyl in Betracht.

Die für X unter Formel (1) angegebenen Bedeutungen sind von links nach rechts zu lesen und sind in dieser Form als Bedeutungen für X in der Formel (1) zu verstehen.

Bevorzugt sind Azofarbstoffe der Formel (1), worin $R_1$ Wasserstoff oder $C_1$-$C_4$-Alkyl, insbesondere Methyl, ist.

Bevorzugt sind ebenfalls Azofarbstoffe der Formel (1), worin A und B unabhängig voneinander gegebenenfalls durch $C_1$-$C_8$-Alkyl, $C_1$-$C_8$-Alkoxy, Halogen, Carboxy, Sulfo, Phenylaminosulfonyl oder Naphthylaminosulfonyl substituiertes Phenyl oder Naphthyl bedeuten, wobei der Phenylaminosulfonyl- und der Naphthylaminosulfonylrest durch $C_1$-$C_8$-Alkyl, $C_1$-$C_8$-Alkoxy, Halogen, Carboxy oder Sulfo, vorzugsweise Sulfo, weitersubstituiert sein kann, insbesondere worin A und B unabhängig voneinander gegebenenfalls durch $C_1$-$C_8$-Alkyl, $C_1$-$C_8$-Alkoxy, Halogen, Carboxy oder Sulfo substituiertes Phenyl oder Naphthyl bedeuten.

Bevorzugt sind ferner Azofarbstoffe der Formel (1), worin A gegebenenfalls durch $C_1$-$C_4$-Alkyl, $C_1$-$C_4$-Alkoxy, Halogen, Carboxy, Sulfo, Phenylaminosulfonyl oder Naphthylaminosulfonyl substituiertes Phenyl ist, wobei der Phenylaminosulfonyl- und der Naphthylaminosulfonylrest durch $C_1$-$C_8$-Alkyl, $C_1$-$C_8$-Alkoxy, Halogen, Carboxy oder Sulfo weitersubstituiert sein kann.

Weiterhin bevorzugt sind Azofarbstoffe der Formel (1), worin B gegebenenfalls durch $C_1$-$C_4$-Alkyl, $C_1$-$C_4$-Alkoxy, Halogen, Carboxy oder Sulfo substituiertes Phenyl ist.

Vorzugsweise ist in den Azofarbstoffen der Formel (1) A gegebenenfalls durch $C_1$-$C_4$-Alkyl, $C_1$-$C_4$-Alkoxy, Halogen, Carboxy, Sulfo, Phenylaminosulfonyl oder Naphthylaminosulfonyl substituiertes Phenyl, wobei der Phenylaminosulfonyl- und der Naphthylaminosulfonylrest durch $C_1$-$C_8$-Alkyl, $C_1$-$C_8$-Alkoxy, Halogen, Carboxy oder Sulfo weitersubstituiert sein kann, und B gegebenenfalls durch $C_1$-$C_4$-Alkyl, $C_1$-$C_4$-Alkoxy, Halogen, Carboxy oder Sulfo substituiertes Phenyl.

Die Azofarbstoffe der Formel (1) enthalten bevorzugt nur eine oder zwei Sulfogruppen, insbesondere nur eine Sulfogruppe.

Bevorzugt sind ebenfalls Azofarbstoffe der Formel (1), worin X $-N(R_1)-SO_2-$, $-O-SO_2-$oder $-SO_2-NH-$ ist, vorzugsweise worin X $-N(R_1)-SO_2-$ und $R_1$ Wasserstoff oder $C_1$-$C_4$-Alkyl, insbesondere Wasserstoff, ist.

Von Interesse sind Azofarbstoffe der Formel (1), worin A und B unabhängig voneinander gegebenenfalls durch $C_1$-$C_4$-Alkyl, $C_1$-$C_4$-Alkoxy, Halogen, Carboxy oder Sulfo substituiertes Phenyl oder Naphthyl, X $-N(R_1)-SO_2-$ und $R_1$ Wasserstoff oder $C_1$-$C_4$-Alkyl, insbesondere Wasserstoff, ist, und die Azofarbstoffe der Formel (1) nur eine oder zwei Sulfogruppen, insbesondere nur eine Sulfogruppe, enthalten.

Besonders bevorzugt sind Azofarbstoffe der Formel

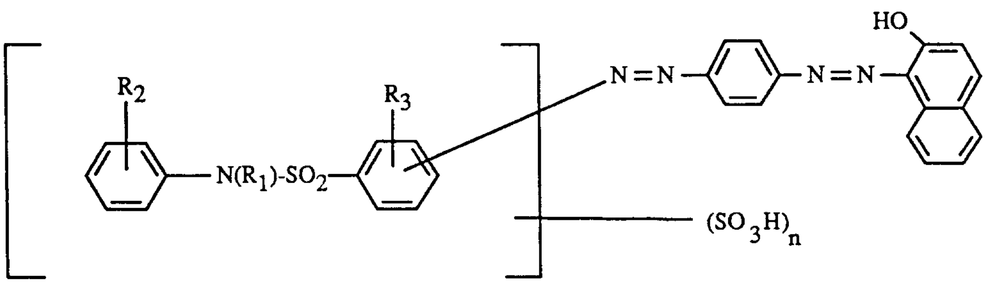

(2),

worin $R_1$ Wasserstoff oder $C_1$-$C_4$-Alkyl, insbesondere Wasserstoff, $R_2$ $C_1$-$C_4$-Alkyl, $C_1$-$C_4$-Alkoxy, Halogen, Carboxy oder gegebenenfalls durch Sulfo substituiertes Phenylaminosulfonyl oder Naphthylaminosulfonyl, $R_3$ $C_1$-$C_4$-Alkyl, $C_1$-$C_4$-Alkoxy, Halogen oder Carboxy und n die Zahl 1 oder 2 bedeutet.

Ganz besonders bevorzugt sind Azofarbstoffe der Formel

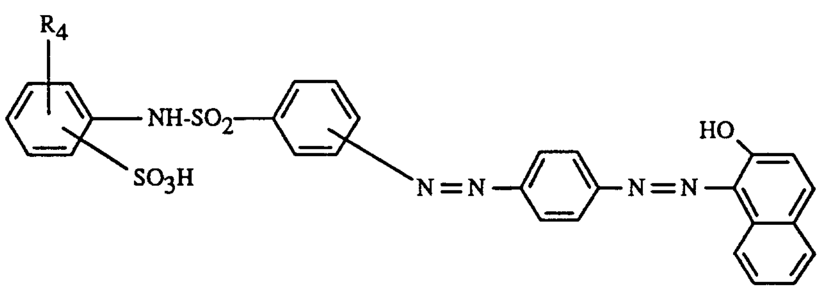

(3),

worin $R_4$ Wasserstoff oder Methyl, insbesondere Wasserstoff, ist.

Ein weiterer Gegenstand der Erfindung sind Farbstoffmischungen, welche mindestens zwei Azofarbstoffe der Formel (1) enthalten, wobei für die Azofarbstoffe der Formel (1) die zuvor angegebenen Bedeutungen und Bevorzugungen gelten.

Gegenstand der Erfindung ist ferner ein Verfahren zur Herstellung der Azofarbstoffe der Formel (1), welches dadurch gekennzeichnet ist, dass man ein Amin der Formel

$A-X-B-NH_2$ (4),

worin A, B und X die unter Formel (1) angegebenen Bedeutungen haben, diazotiert und auf eine Verbindung der Formel

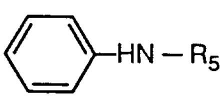

(5),

worin $R_5$ Wasserstoff oder $-CH_2-SO_3H$ ist, kuppelt, und das so erhaltene Produkt, falls $R_5$ $-CH_2SO_3H$ ist, zur Verbindung der Formel

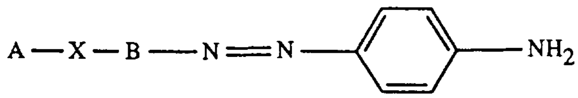

(6)

umsetzt, die Verbindung der Formel (6) diazotiert und auf eine Verbindung der Formel

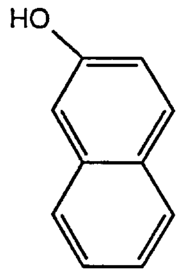

(7)

kuppelt.

Mischungen der Farbstoffe der Formel (1) können beispielsweise durch Mischsynthese hergestellt werden, wobei man wie oben angegeben verfährt, jedoch mindestens zwei Verbindungen der Formel (4) verwendet.

Die Diazotierung der Verbindungen der Formeln (4) und (6) erfolgt jeweils in an sich bekannter Weise, z.B. mit einem Nitrit, z.B. mit einem Alkalimetallnitrit wie Natriumnitrit, in einem mineralsauren Medium, z.B. in einem salzsauren Medium, bei Temperaturen von beispielsweise -5 bis 30 °C und vorzugsweise bei 0 bis 10 °C.

Die Kupplung auf die Kupplungskomponenten der Formel (5) und (7) erfolgt jeweils in an sich bekannter Weise, bei sauren, neutralen bis alkalischen pH-Werten und Temperaturen von beispielsweise -5 bis 30 °C, vorzugsweise 0 bis 15 °C.

Die Umsetzung des aus der Kupplung der Verbindung der Formel (4) mit der Verbindung der Formel (5) erhaltenen Reaktionsproduktes zur Verbindung der Formel (6) ist nur dann erforderlich, wenn eine Verbindung der Formel (5) verwendet wird, worin $R_5$ $-CH_2-SO_3H$ ist. In diesem Falle erfolgt die Umsetzung in Gegenwart einer Base, wie z.B. Natriumhydroxid, bei einer Temperatur von beispielsweise 40 bis 100 °C, insbesondere bei einer Temperatur von 80 bis 100 °C.

Der Substituent $R_1$ in der Bedeutung als Alkyl kann auch im Anschluss an die Herstellung des Farbstoffes der Formel (1) eingeführt werden, z.B. durch Alkylierung mit Dialkylsulfat, Dialkylcarbonat, Dialkylmethanphosphonat oder Toluolsulfonsäurestermethyl-Derivate, in wässriger Lösung nach an sich bekannter Verfahrensweise.

In einer weiteren Ausführungsform erfolgt die Herstellung von Farbstoffen der Formel (1), worin X $-N(R_1)-SO_2-$ ist, durch Umsetzung einer Verbindung der Formel

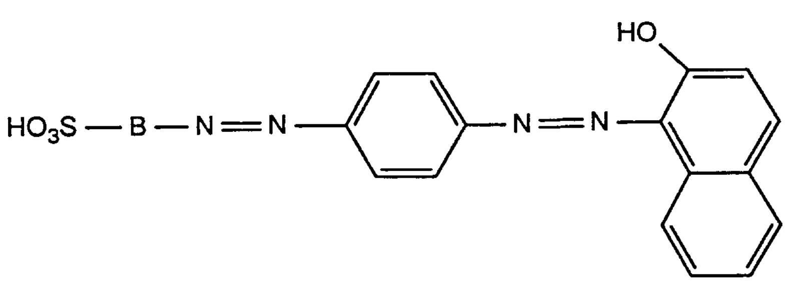

(8),

mit einem Halogenierungsmittel zu einer Verbindung der Formel

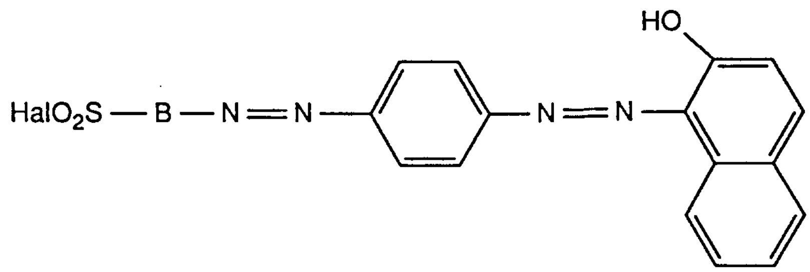

(9)

und anschliessender Umsetzung der Verbindung der Formel (9) mit einer Verbindung der Formel

$A-N(R_1)H$ (10),

wobei A, B und $R_1$ die unter Formel (1) angegebenen Bedeutungen haben und Hal Halogen, insbesondere Chlor, ist.

Die Umsetzung der Verbindung der Formel (8) zur Verbindung der Formel (9) mit einem Halogenierungsmittel, wie z.B. mit Thionylchlorid oder Sulfurylchlorid, erfolgt in einem organischen Lösungsmittel, wie z.B. Sulfolan, Dimethylsulfoxid oder Dimethylformamid, in an sich bekannter Weise. Die Umsetzung der Verbindung der Formel (9) mit der Verbindung der Formel (10) erfolgt nach an sich bekannten Verfahren.

Bevorzugte Ausführungsformen des erfindungsgemässen Verfahrens sind dadurch gekennzeichnet, dass man

- eine Verbindung der Formel (4) verwendet, worin $R_1$ Wasserstoff oder $C_1$-$C_4$-Alkyl, insbesondere Methyl, bedeutet;
- eine Verbindung der Formel (4) verwendet, worin A und B unabhängig voneinander gegebenenfalls durch $C_1$-$C_8$-Alkyl, $C_1$-$C_8$-Alkoxy, Halogen, Carboxy, Sulfo, Phenylaminosulfonyl oder Naphthylaminosulfonyl substituiertes Phenyl oder Naphthyl bedeuten, wobei der Phenylaminosulfonyl- und der Naphthylaminosulfonylrest durch $C_1$-$C_8$-Alkyl, $C_1$-$C_8$-Alkoxy, Halogen, Carboxy oder Sulfo weitersubstituiert sein kann;
- eine Verbindung der Formel (4) verwendet, worin A gegebenenfalls durch $C_1$-$C_4$-Alkyl, $C_1$-$C_4$-Alkoxy, Halogen, Carboxy, Sulfo, Phenylaminosulfonyl oder Naphthylaminosulfonyl substituiertes Phenyl ist, wobei der Phenylaminosulfonyl- und der Naphthylaminosulfonylrest durch $C_1$-$C_8$-Alkyl, $C_1$-$C_8$-Alkoxy, Halogen, Carboxy oder Sulfo weitersubstituiert sein kann;
- eine Verbindung der Formel (4) verwendet, worin B gegebenenfalls durch $C_1$-$C_4$-Alkyl, $C_1$-$C_4$-Alkoxy, Halogen, Carboxy oder Sulfo substituiertes Phenyl ist;
- eine Verbindung der Formel (4) verwendet, welche nur eine oder zwei Sulfogruppen, insbesondere nur eine Sulfogruppe enthält;
- eine Verbindung der Formel (4) verwendet, worin X $-N(R_1)-SO_2-$ und $R_1$ Wasserstoff oder $C_1$-$C_4$-Alkyl, insbesondere Wasserstoff, ist;
- eine Verbindung der Formel (5) verwendet, worin $R_5$ $-CH_2-SO_3H$ ist und das aus der Kupplung der Verbindung der Formel (4) mit der Verbindung der Formel (5) erhaltene Reaktionsprodukt zur Verbindung der Formel (6) umsetzt.

Vorzugsweise sind A und B in der Verbindung der Formel (4) gegebenenfalls durch $C_1$-$C_4$-Alkyl, $C_1$-$C_4$-Alkoxy, Halogen, Carboxy oder Sulfo, insbesondere durch Methyl, Methoxy, Chlor, Carboxy oder Sulfo, substituiertes Phenyl.

Eine interessante Ausführungsform des erfindungsgemässen Verfahrens ist dadurch gekennzeichnet, dass man eine Verbindung der Formel (4), worin A und B unabhängig voneinander gegebenenfalls durch $C_1$-$C_4$-Alkyl, $C_1$-$C_4$-Alkoxy, Halogen, Carboxy oder Sulfo substituiertes Phenyl oder Naphthyl, X $-N(R_1)-SO_2-$ und $R_1$ Wasserstoff oder $C_1$-$C_4$-Alkyl, insbesondere Wasserstoff, ist, und die Verbindung der Formel (4) nur eine oder zwei Sulfogruppen, insbesondere nur eine Sulfogruppe, enthält, auf eine Verbindung der Formel (5), worin $R_5$ $-CH_2-SO_3H$ ist, kuppelt.

Eine besonders bevorzugte Ausführungsform des erfindungsgemässen Verfahrens ist dadurch gekennzeichnet, dass man eine Verbindung der Formel

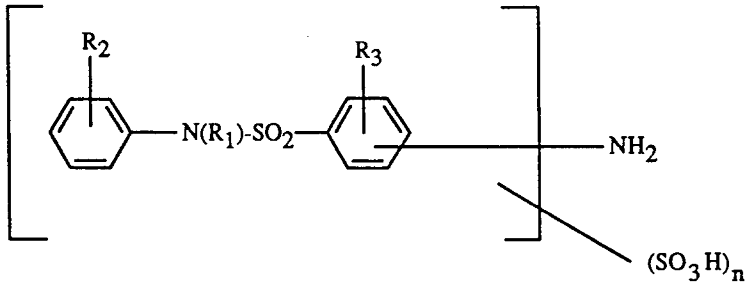

(11),

worin $R_1$, $R_2$, $R_3$ und n die unter Formel (2) angegebenen Bedeutungen haben, auf eine Verbindung der Formel

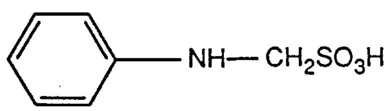

(12)

kuppelt.

Eine ganz besonders bevorzugte Ausführungsform des erfindungsgemässen Verfahrens ist dadurch gekennzeichnet, dass man eine Verbindung der Formel

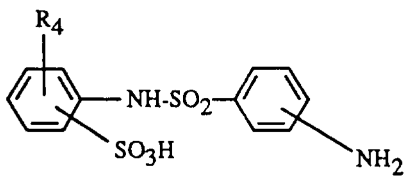

(13),

worin $R_4$ die unter Formel (3) angegebenen Bedeutungen hat, auf eine Verbindung der Formel (12) kuppelt.

Die Amine der Formel (4) und die Verbindungen der Formel (5) sind an sich bekannt oder können in Analogie zu bekannten Verbindungen hergestellt werden.

Die Farbstoffe der Formel (1) liegen entweder in der Form ihrer freien Säure oder vorzugsweise als deren Salze vor.

Als Salze kommen beispielsweise die Alkall- oder Ammmoniumsalze oder die Salze eines organischen Amins in Betracht.

Als Beispiel seien die Natrium-, Lithium-, Kalium- oder Ammoniumsalze oder das Salz des Mono-, Di- oder Triäthanolamins genannt.

Die erfindungsgemässen Azofarbstoffe der Formel (1) eignen sich nach an sich bekannten Methoden zum Farben und Bedrucken, insbesondere von stickstoffhaltigen oder hydroxygruppenhaltigen Fasermaterialien, Papier oder Leder, wie z.B. textilen Fasermaterialien aus Cellulose, Seide und insbesondere Wolle und synthetischen Polyamiden. Die erfindungsgemässen Azofarbstoffe der Formel (1) können in allgemein üblicher, gegebenenfalls zuvor aufbereiteter Form zum Färben oder Bedrucken verwendet werden. Man erhält egale Färbungen in roten Tönen mit guten Allgemeinechtheiten, insbesondere guter Reib-, Nass-, Nassreib- und Lichtechtheit. Ferner sind die erfindungsgemässen Farbstoffe sehr gut wasserlöslich . Weiterhin zeigen die erfindungsgemässen Farbstoffe ein sehr gutes Aufbauvermögen und sind sehr gut mit anderen Farbstoffen kombinierbar. Das oben genannte Textilmaterial kann in den verschiedensten Verarbeitungsformen vorliegen, wie z.B. als Faser, Garn, Gewebe oder Gewirke.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1: In einem ersten Schritt wird eine Mischung aus 41 Teilen einer 41%-igen wässrigen Natriumhydrogensulfit-Lösung und 13 Teilen einer 37%-igen wässrigen Formaldehyd-Lösung hergestellt, die anschliessend kurze Zeit gerührt und bei 65° mit 13,95 Teilen Anilin versetzt wird. Es bildet sich langsam eine klare Lösung, die nach 2 Stunden beim Abkühlen kristallin erstarrt. Dann wird die Reaktionsmischung mit 140 Teilen Wasser verdünnt, auf 60° erwärmt und so lange gerührt, bis eine Klare Lösung entsteht. Durch Zugabe von Eis wird auf 5° abgekühlt. Anschliessend werden 16,8 Teile Natriumhydrogencarbonat zugegeben.

In einem zweiten Schritt werden in einem separaten Reaktionskolben 49,2 Teile einer Verbindung, die in Form der freien Säure der Formel

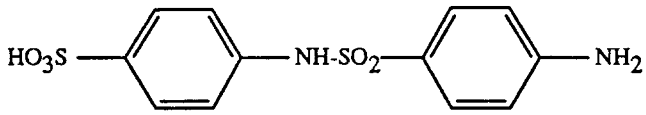

(101)

entspricht, in 150 Teilen Wasser mit konzentrierter wässriger Natriumhydroxid-Lösung bei pH 7,5 gelöst und daraufhin mit 37,5 Teilen einer 4-normalen Natriumnitrit-Lösung versetzt. Die Reaktionsmischung wird auf eine vorgelegte Mischung von 150 Teilen Eis und 37,5 Teilen einer ca. 32%-igen Salzsäure-Lösung getropft. Die so erhaltene Diazosuspension wird der im ersten Schritt erhaltenen Lösung zugegeben. Nach einigen Stunden werden 190 Teile Natriumchlorid zugegeben und anschliessend das Reaktionsprodukt abfiltriert. Man erhält 180 Teile eines noch feuchten Reaktionsprodukts, das in Form der freien Säure der Verbindung der Formel

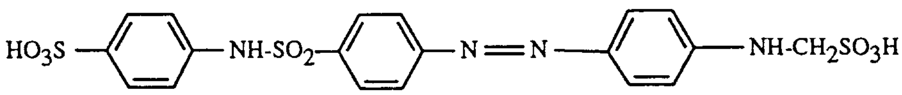

(102)

entspricht.

Anschliessend werden 180 Teile der wie oben angegeben erhaltenen Verbindung der Formel (102) in 450 Teile einer 7%-igen wässrigen Natriumhydroxid-Lösung eingetragen und die Mischung 2 bis 3 Stunden zum Sieden erhitzt. Nach Abkühlung auf Raumtemperatur wird mit ca. 32%-iger Salzsäure-Lösung ein pH von ca. 0,5 eingestellt. Das ausgefällte Produkt wird filtriert, mit Wasser gewaschen und im Vakuum bei einer Temperatur von 50 bis 60° getrocknet. Man erhält 43,9 Teile eines Reaktionsprodukts, das in Form der freien Säure der Verbindung der Formel

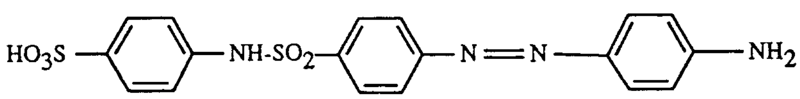

(103)

entspricht.

4,32 Teile der wie oben angegeben erhaltenen Verbindung der Formel (103) werden in 50 Teile Wasser unter Zugabe von verdünnter wässriger Natriumhydroxid-Lösung bei pH 7,5 gelöst und mit 2,5 Teilen einer 4-normalen wässrigen Natriumnitritlösung versetzt. Die dünnflüssige, auf eine Temperatur von 55° erwärmte Suspension wird auf eine vorgelegte Mischung von 50 Teilen Eis und 2,5 Teilen einer ca. 32%-igen Salzsäure-Lösung getropft. Die Reaktionsmischung wird anschliessend 30 Minuten nachgerührt und unter Einhaltung eines pH-Wertes von ca. 8,5 und einer Temperatur von 2 bis 5° zu einer vorgelegten Lösung gegeben. Die vorgelegte Lösung wird zuvor durch Lösen von 1,44 Teilen 2-Naphthol in 100 Teilen warmem Wasser, unter Zugabe von 5 Teilen 2-normaler wässriger Natriumhydroxid-Lösung und 1,06 Teilen Natriumcarbonat, und anschliessender Abkühlung auf eine Temperatur von 2° hergestellt. Nach beendeter Kupplung werden der so erhaltenen Reaktionsmischung 18 Teile Natriumchlorid zugesetzt, der ausgefällte Farbstoff abfiltriert, mit verdünnter wässriger Natriumchlorid-Lösung und Eiswasser gewaschen und im Vakuum bei einer Temperatur von 50 bis 60° getrocknet. Man erhält 3,8 Teile eines Farbstoffs, der in Form der freien Säure der Verbindung der Formel

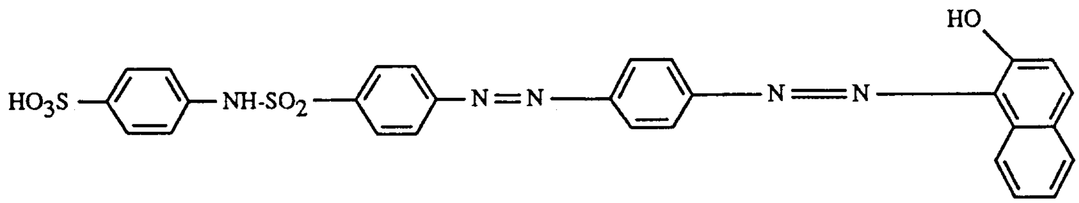 (104)

entspricht. Der Farbstoff der Formel (104) färbt natürliches und synthetisches Polyamid in roten Farbtönen.

Beispiele 2 bis 101: Verfährt man wie in Beispiel 1 angegeben, verwendet jedoch statt 49,2 Teile der Verbindung der Formel (101) eines der in der folgenden Tabelle in Spalte 2 in Form der freien Säure angegebenen Amins, so erhält man analoge Farbstoffe, die natürliches und synthetisches Polyamid in roten Farbtönen färben.

Tabelle

| Bsp. | Amin | |
|---|---|---|
| 2 | 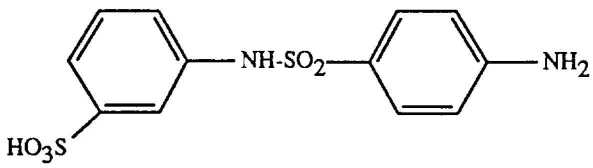 | (105) |
| 3 | 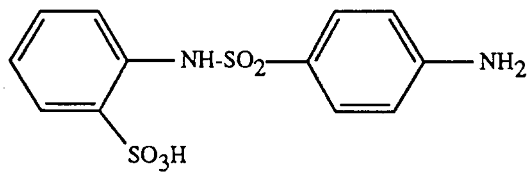 | (106) |
| 4 | 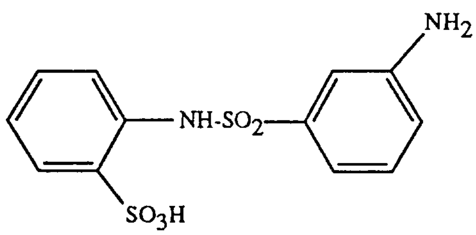 | (107) |
| 5 | 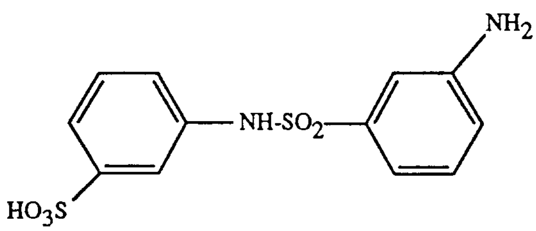 | (108) |
| 6 | 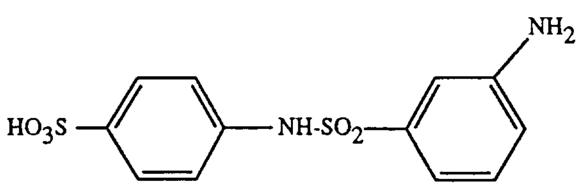 | (109) |

Tabelle (Fortsetzung)

| Bsp. | Amin | |
|---|---|---|
| 7 | 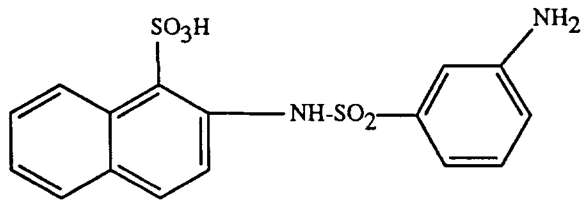 | (110) |
| 8 | 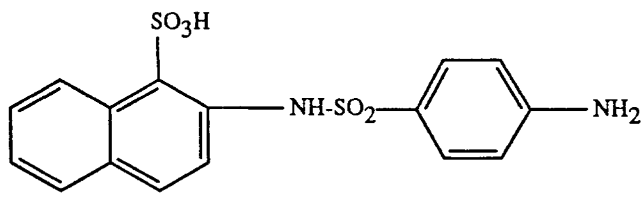 | (111) |
| 9 | 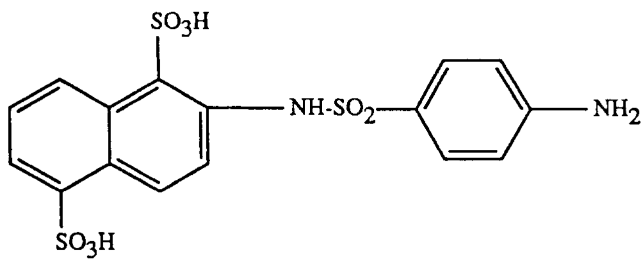 | (112) |
| 10 | 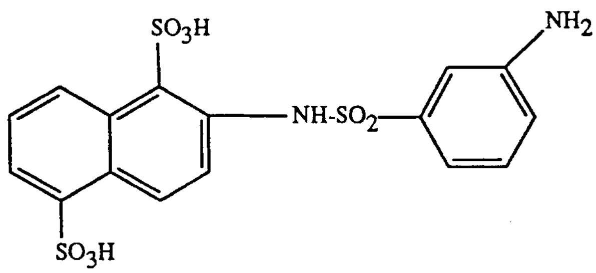 | (113) |
| 11 | 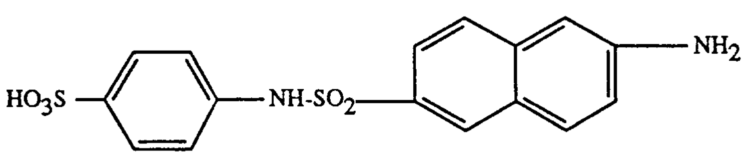 | (114) |

Tabelle (Fortsetzung)

| Bsp. | Amin | |
|---|---|---|
| 12 | 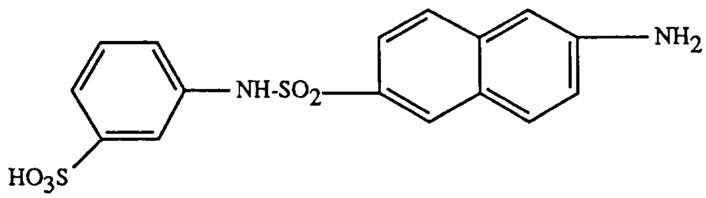 | (115) |
| 13 | 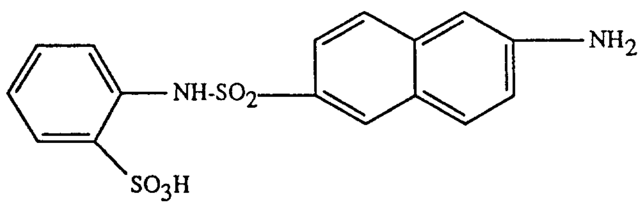 | (116) |
| 14 | 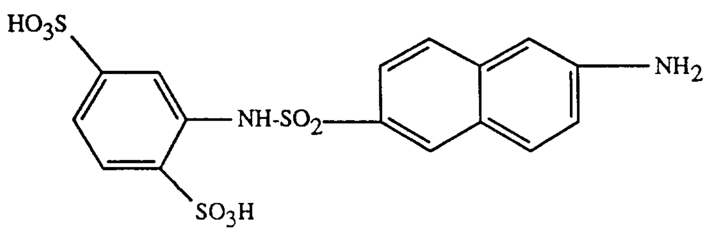 | (117) |
| 15 | 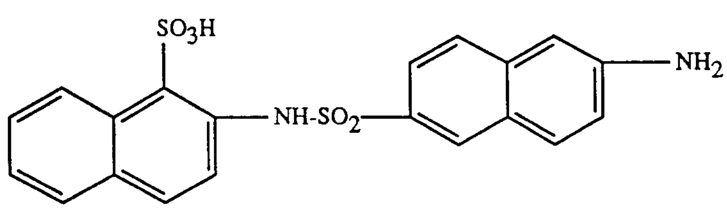 | (118) |
| 16 | 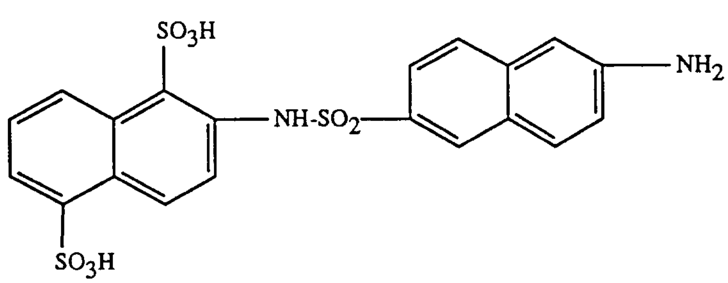 | (119) |

Tabelle (Fortsetzung)

| Bsp. | Amin | |
|---|---|---|
| 17 | 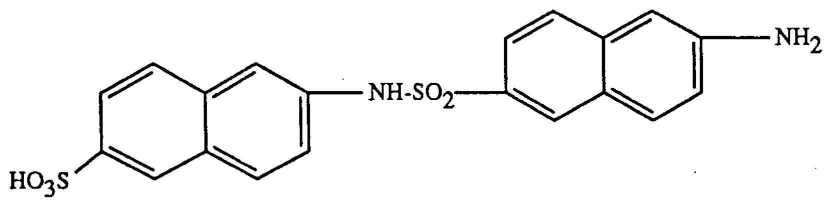 | (120) |
| 18 | 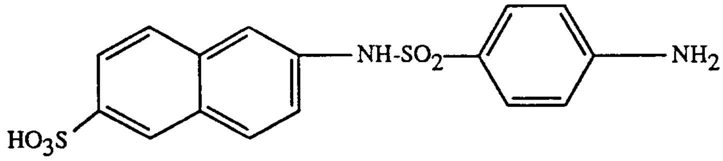 | (121) |
| 19 | 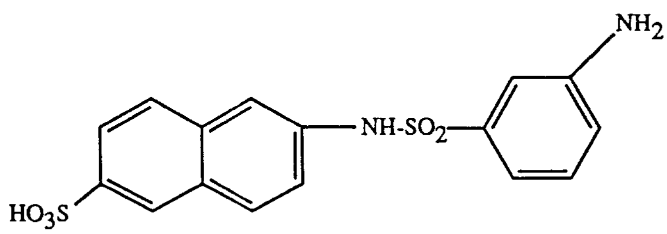 | (122) |
| 20 | 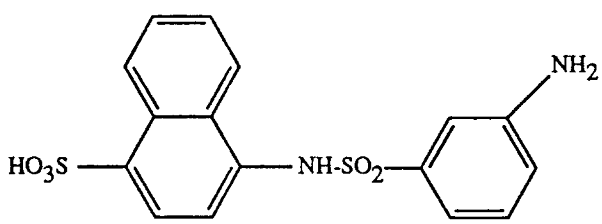 | (123) |
| 21 | 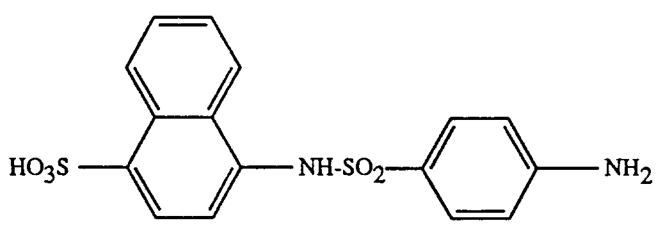 | (124) |

Tabelle (Fortsetzung)

| Bsp. | Amin | |
|---|---|---|
| 22 | 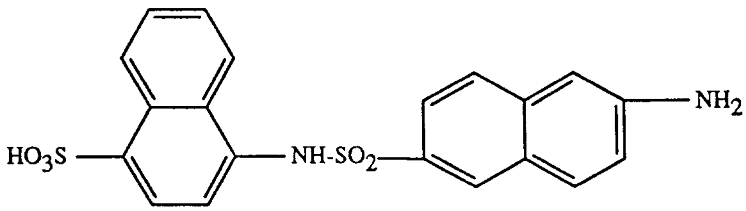 | (125) |
| 23 | 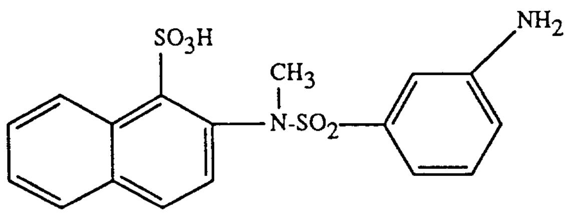 | (126) |
| 24 | 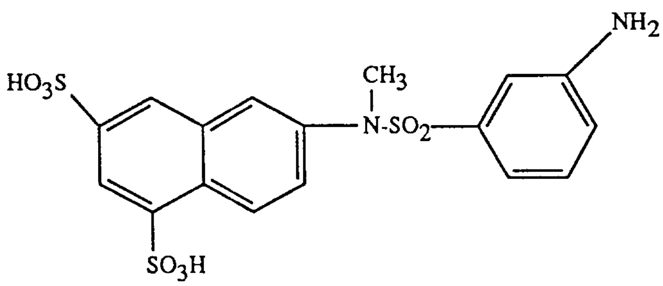 | (127) |
| 25 | 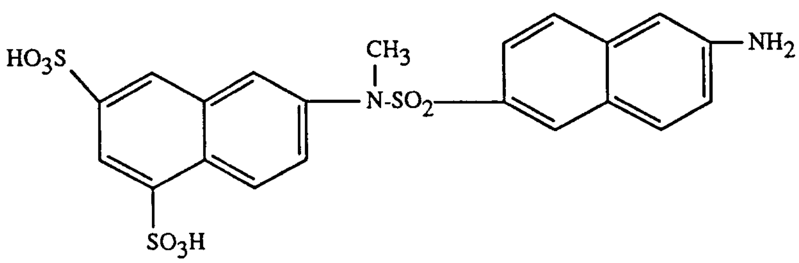 | (128) |

Tabelle (Fortsetzung)

| Bsp. | Amin | |
|---|---|---|
| 26 | 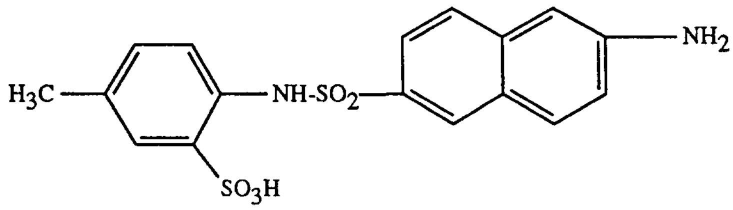 | (129) |
| 27 | 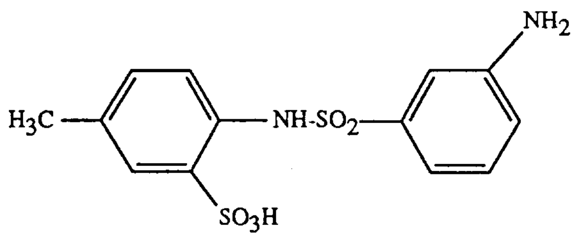 | (130) |
| 28 | 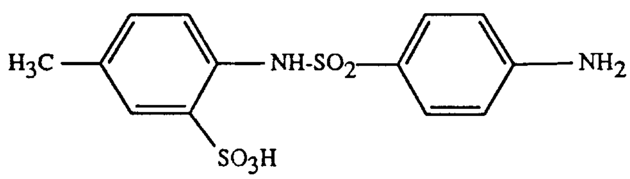 | (131) |
| 29 | 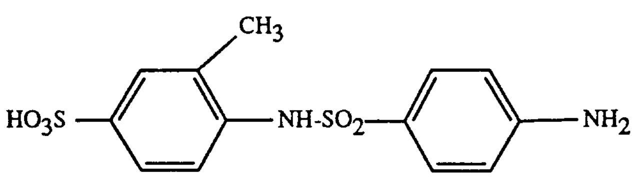 | (132) |
| 30 | 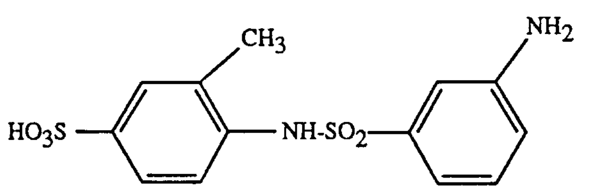 | (133) |

Tabelle (Fortsetzung)

| Bsp. | Amin | |
|---|---|---|
| 31 | 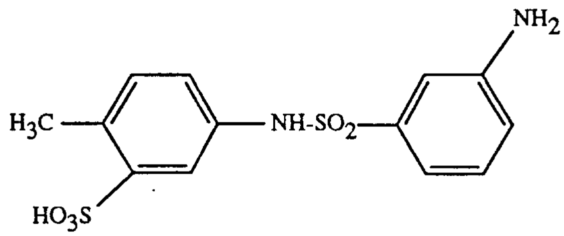 | (134) |
| 32 | 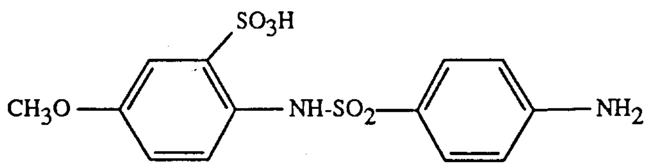 | (135) |
| 33 | 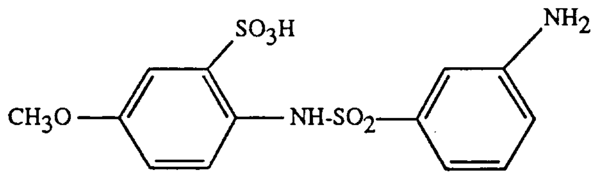 | (136) |
| 34 | 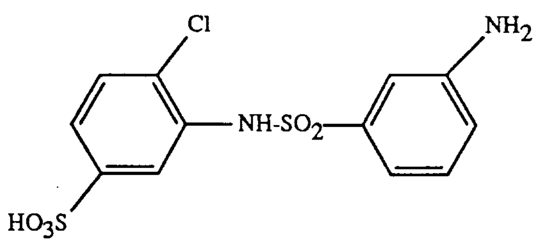 | (137) |
| 35 | 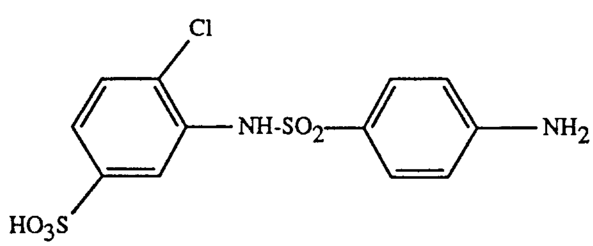 | (138) |

Tabelle (Fortsetzung)

| Bsp. | Amin | |
| --- | --- | --- |
| 36 | 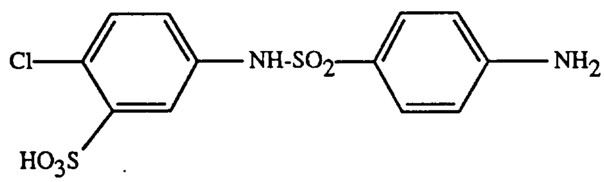 | (139) |
| 37 | 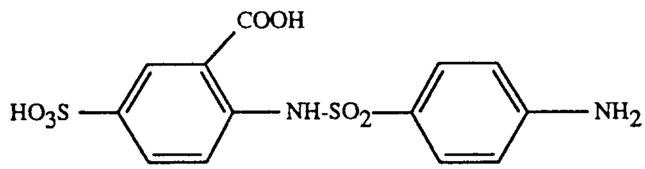 | (140) |
| 38 | 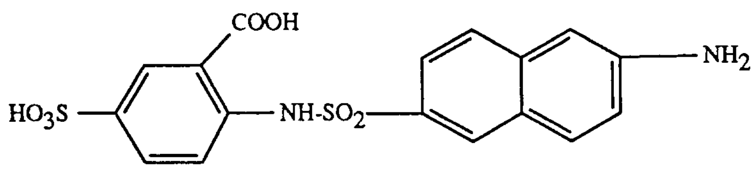 | (141) |
| 39 | 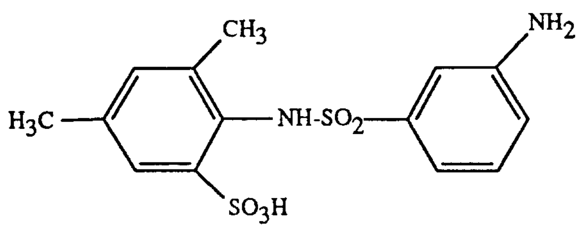 | (142) |
| 40 | 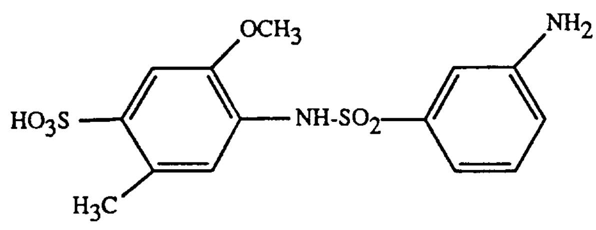 | (143) |

<u>Tabelle</u> (Fortsetzung)

Bsp. Amin

41 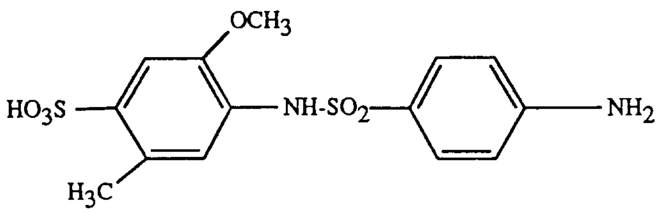 (144)

42 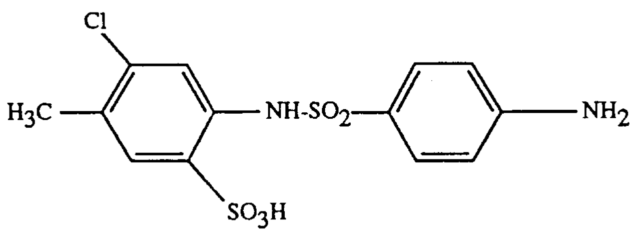 (145)

43 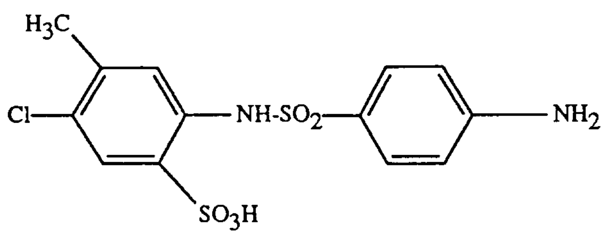 (146)

44 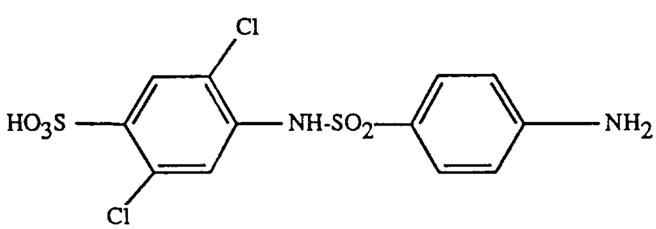 (147)

45 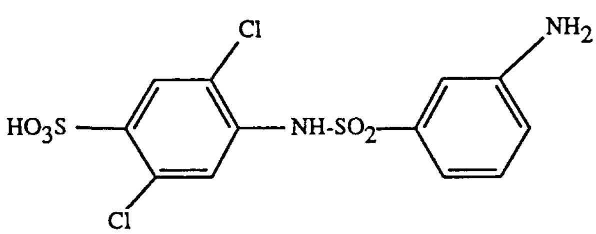 (148)

Tabelle (Fortsetzung)

| Bsp. | Amin | |
|---|---|---|
| 46 | 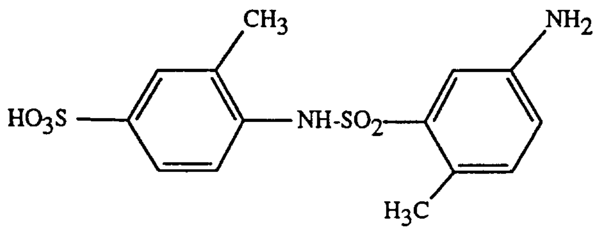 | (149) |
| 47 | 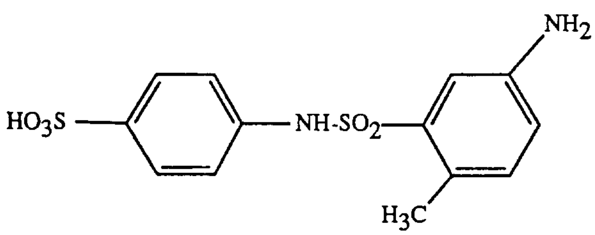 | (150) |
| 48 | 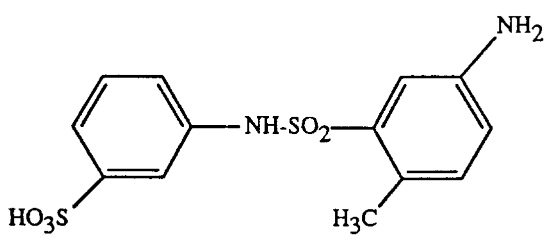 | (151) |
| 49 | 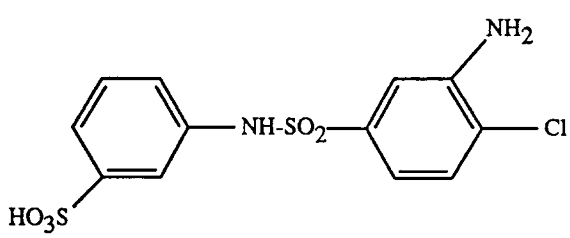 | (152) |
| 50 | 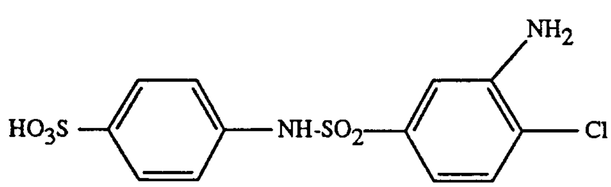 | (153) |

Tabelle (Fortsetzung)

| Bsp. | Amin | |
|---|---|---|
| 51 | 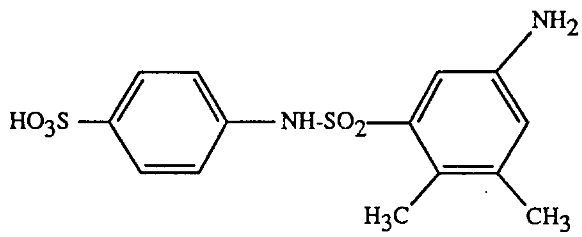 | (154) |
| 52 | 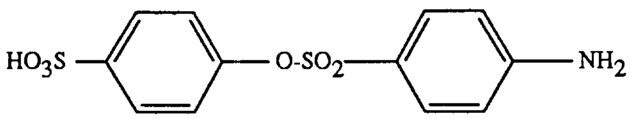 | (155) |
| 53 | 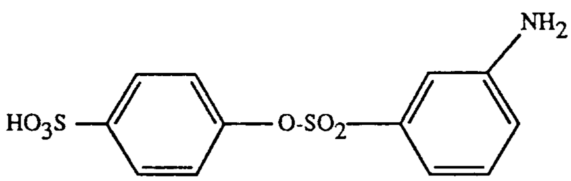 | (156) |
| 54 | 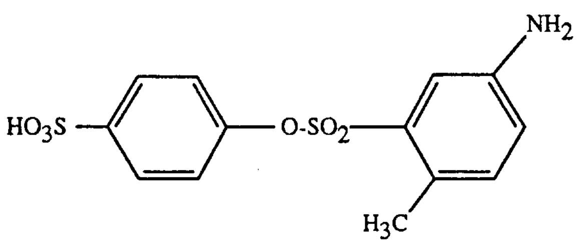 | (157) |
| 55 | 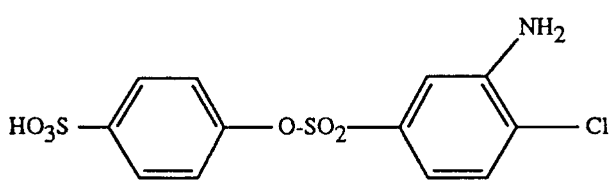 | (158) |

Tabelle (Fortsetzung)

| Bsp. | Amin | |
|---|---|---|
| 56 | 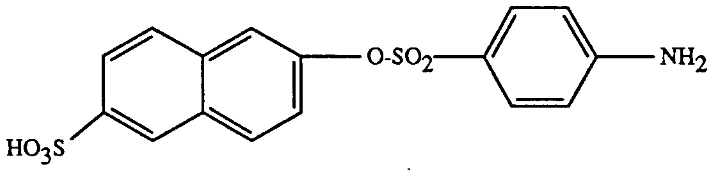 | (159) |
| 57 | 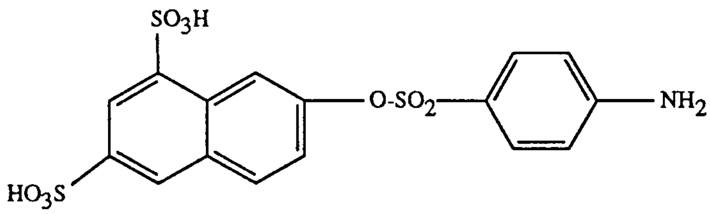 | (160) |
| 58 | 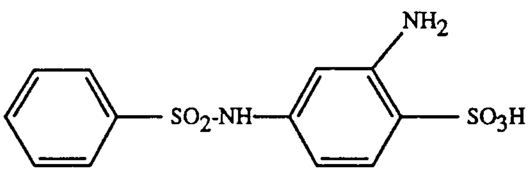 | (161) |
| 59 | 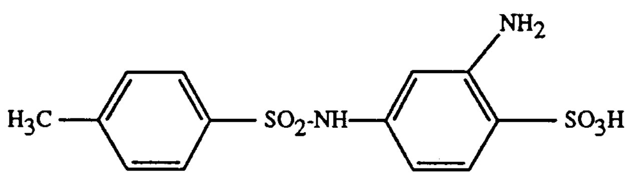 | (162) |
| 60 | 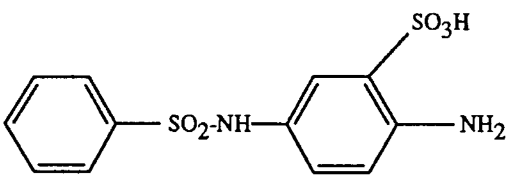 | (163) |
| 61 | 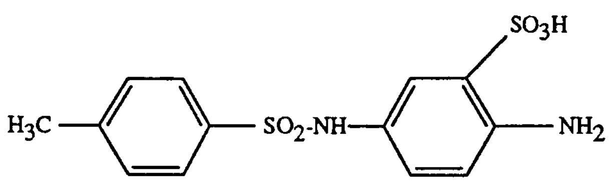 | (164) |

Tabelle (Fortsetzung)

| Bsp. | Amin | |
|---|---|---|
| 62 | 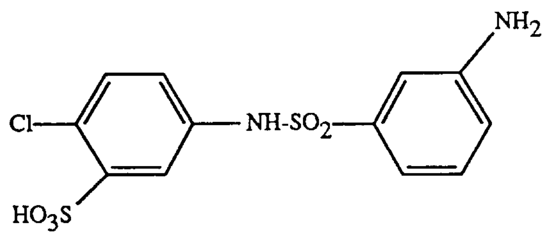 | (165) |
| 63 | 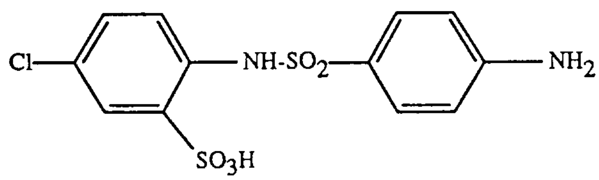 | (166) |
| 64 | 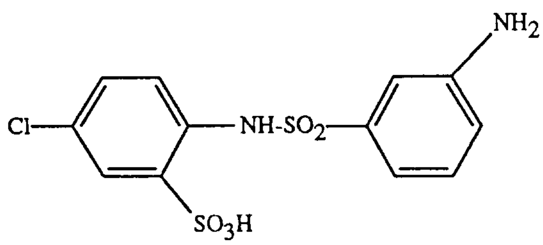 | (167) |
| 65 | 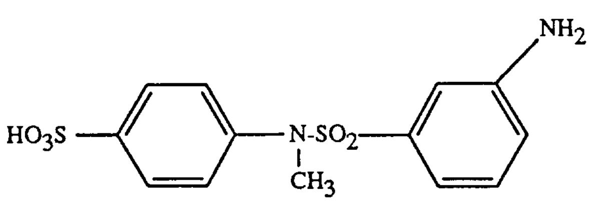 | (168) |
| 66 | 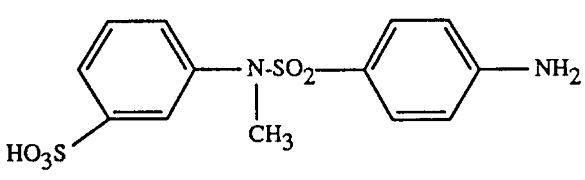 | (169) |

Tabelle (Fortsetzung)

| Bsp. | Amin | |
|---|---|---|
| 67 | 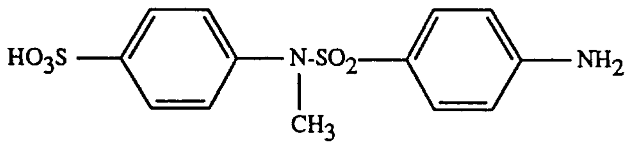 | (170) |
| 68 | 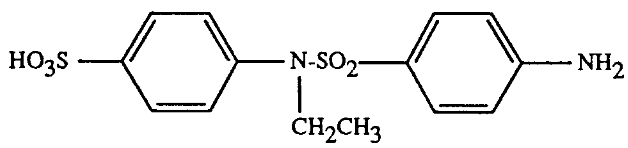 | (171) |
| 69 | 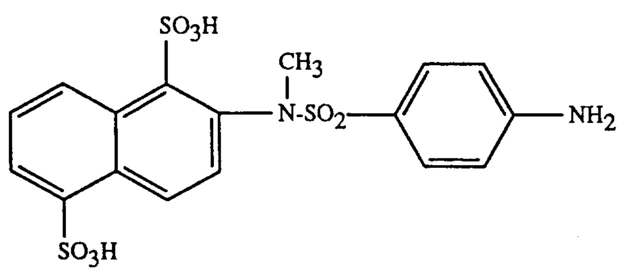 | (172) |
| 70 | 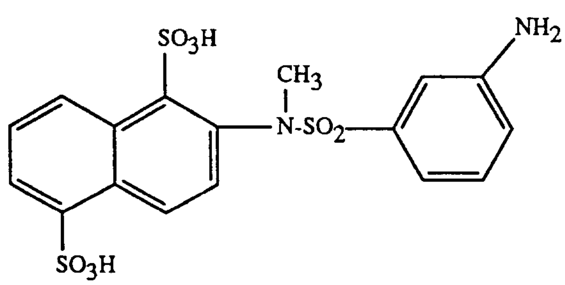 | (173) |

Tabelle (Fortsetzung)

| Bsp. | Amin | |
|---|---|---|
| 71 | 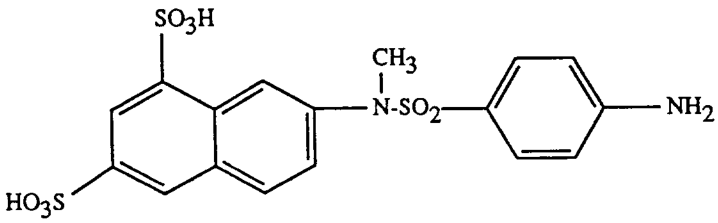 | (174) |
| 72 | 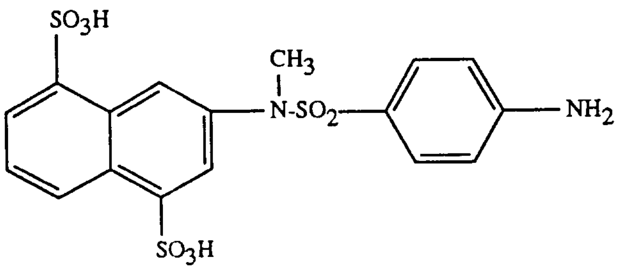 | (175) |
| 73 | 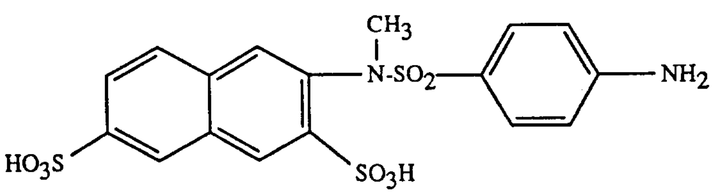 | (176) |
| 74 | 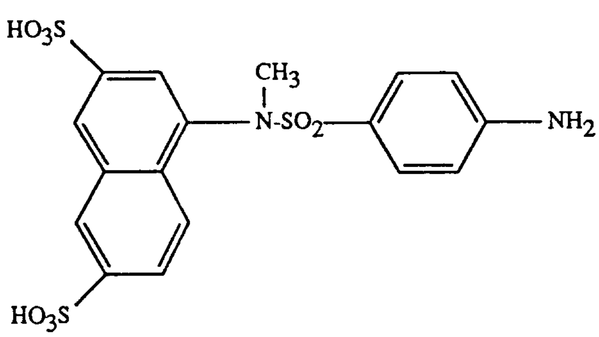 | (177) |

Tabelle (Fortsetzung)

| Bsp. | Amin | |
|---|---|---|
| 75 | 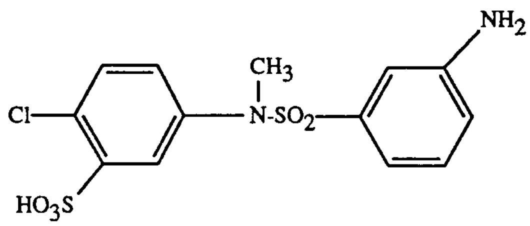 | (178) |
| 76 | 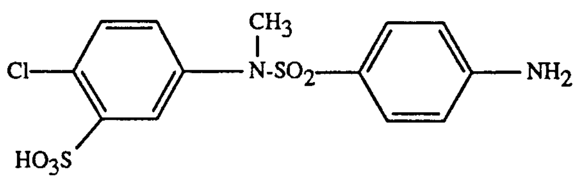 | (179) |
| 77 | 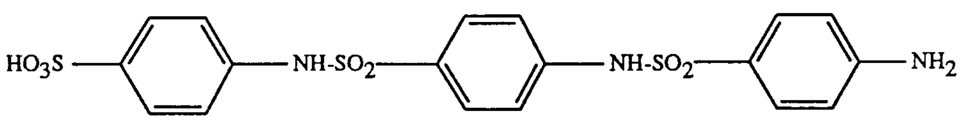 | (180) |
| 78 | 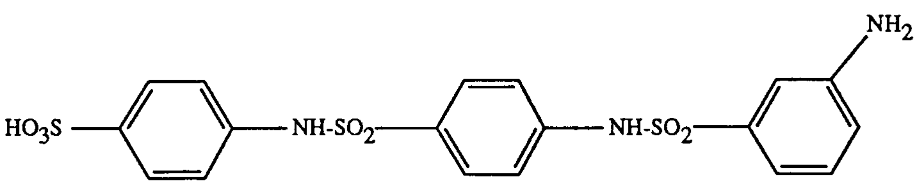 | (181) |
| 79 | 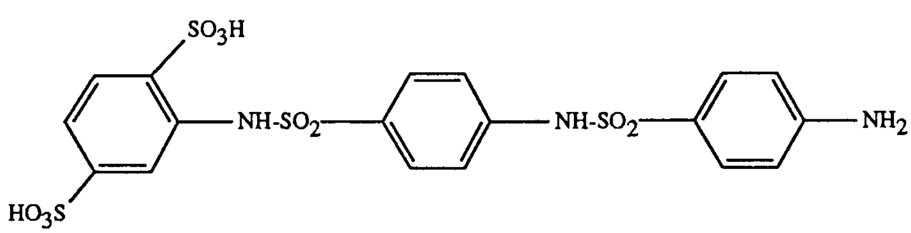 | (182) |

Tabelle (Fortsetzung)

| Bsp. | Amin | |
|---|---|---|
| 80 | 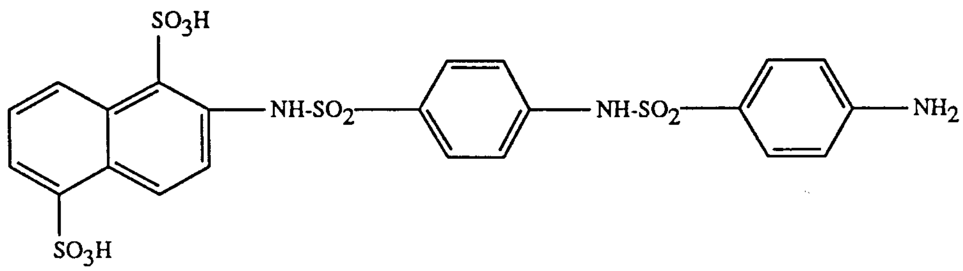 | (183) |
| 81 | 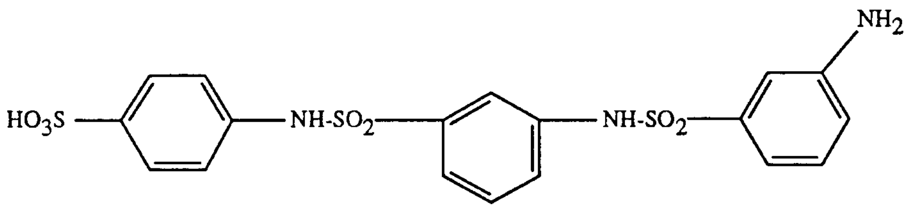 | (184) |
| 82 | 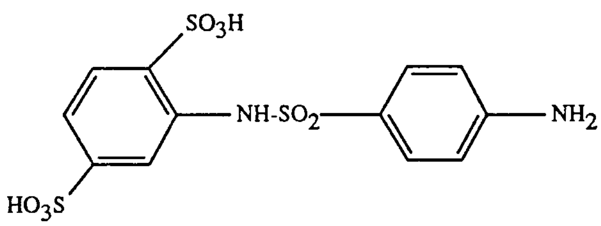 | (185) |
| 83 | 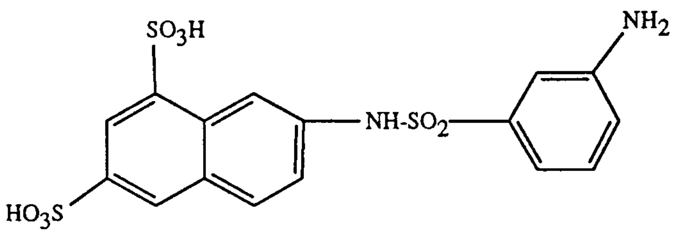 | (186) |

Tabelle (Fortsetzung)

| Bsp. | Amin | |
|---|---|---|
| 84 | 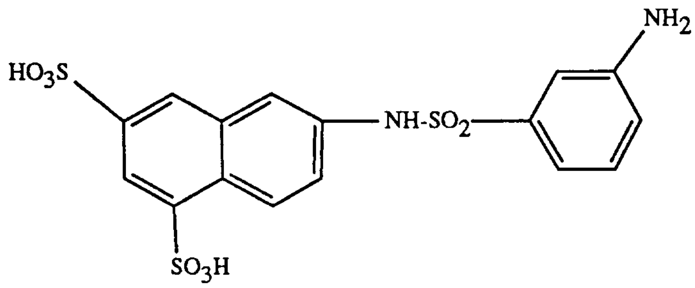 | (187) |
| 85 | 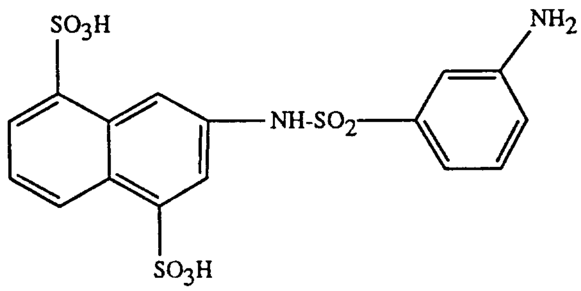 | (188) |
| 86 | 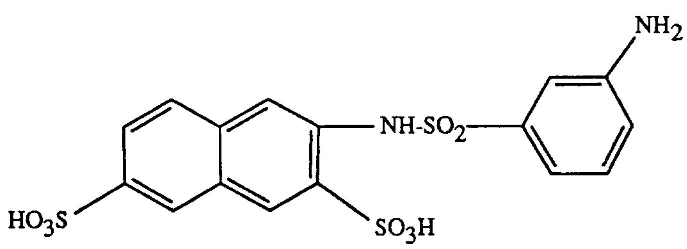 | (189) |
| 87 | 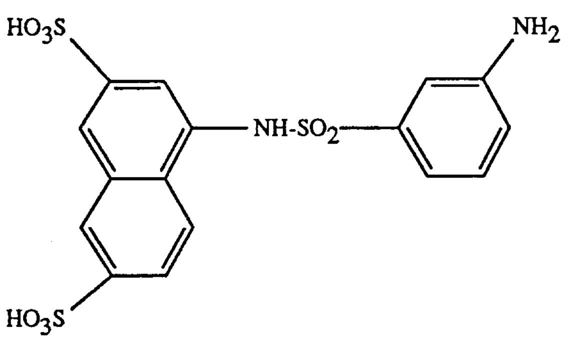 | (190) |

Tabelle (Fortsetzung)

| Bsp. | Amin | |
|---|---|---|
| 88 | 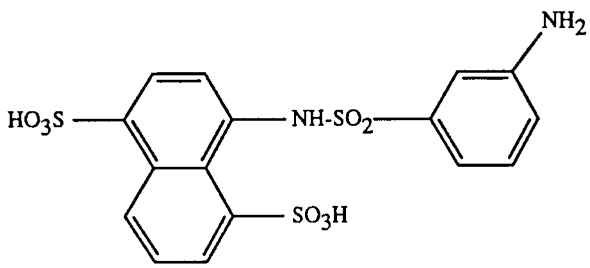 | (191) |
| 89 | 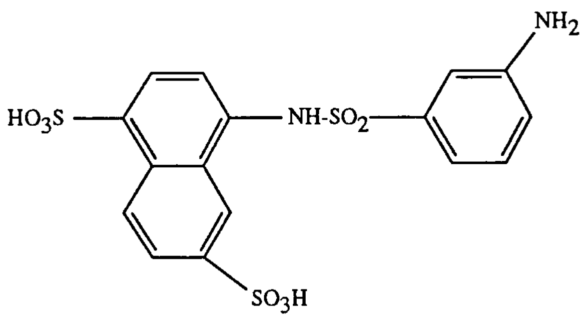 | (192) |
| 90 | 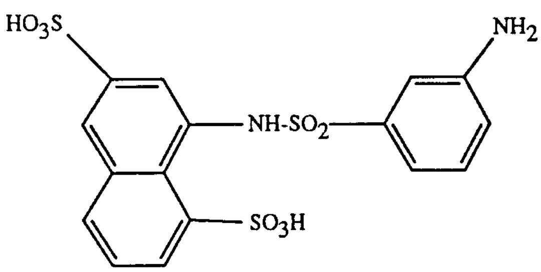 | (193) |
| 91 | 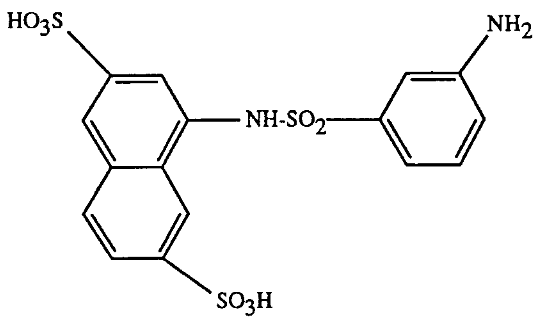 | (194) |

Tabelle (Fortsetzung)

| Bsp. | Amin | |
|---|---|---|
| 92 | 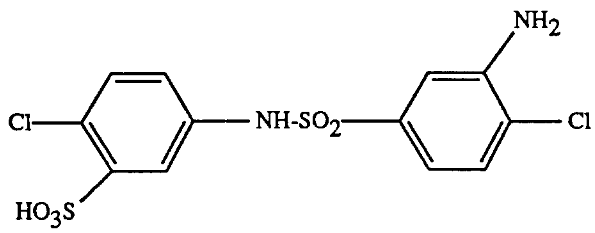 | (195) |
| 93 | 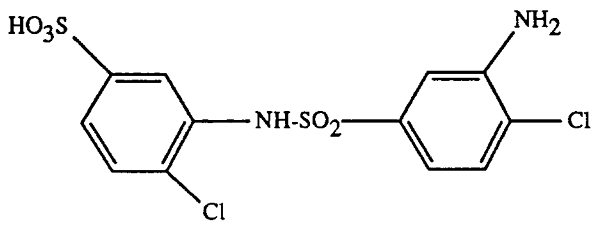 | (196) |
| 94 | 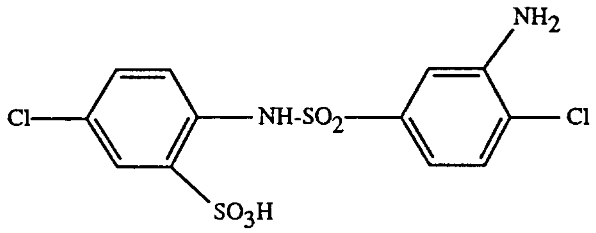 | (197) |
| 95 | 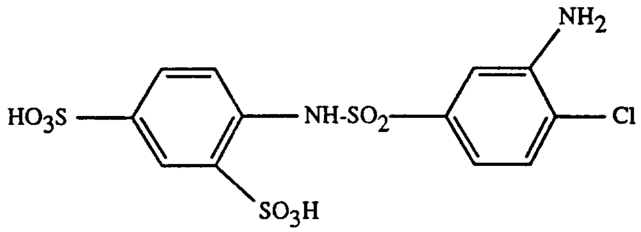 | (198) |

Tabelle (Fortsetzung)

| Bsp. | Amin | |
|---|---|---|
| 96 | 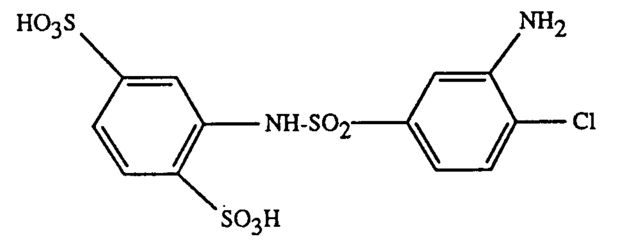 | (199) |
| 97 | 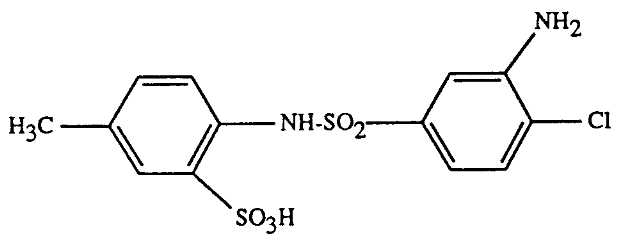 | (200) |
| 98 | 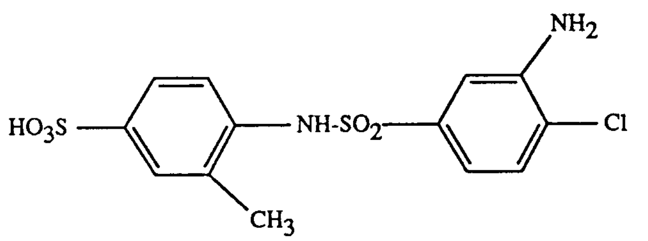 | (201) |
| 99 | 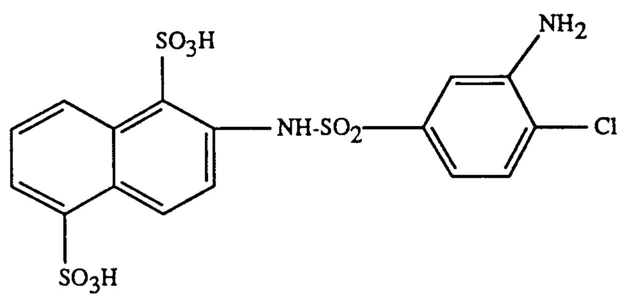 | (202) |

Tabelle (Fortsetzung)

| Bsp. | Amin | |
|---|---|---|
| 100 | 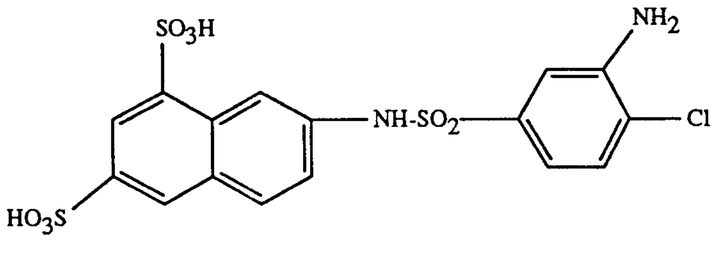 | (203) |
| 101 | 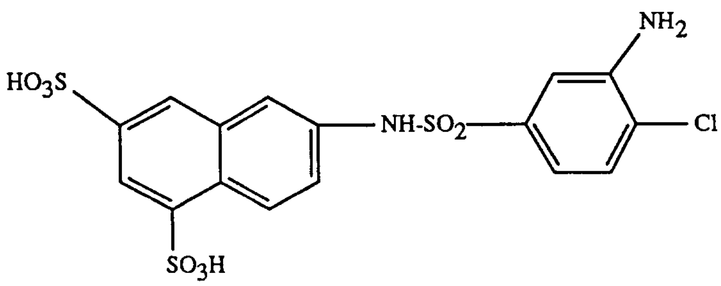 | (204) |

Färbevorschrift I

Man färbt 10 Teile Polyamid-6,6-Gewebe in 500 Teilen einer wässrigen Flotte, die 2 g/l Ammonacetat enthält und mit Essigsäure auf pH 5 gestellt wird. Der Anteil des Farbstoffs gemäss Beispiel 1 beträgt 0,7 % bezogen auf das Fasergewicht. Die Färbedauer bei einer Temperatur von 98° beträgt 30 bis 90 Minuten. Das gefärbte Polyamid-6,6-Gewebe wird anschliessend herausgenommen und wie üblich gewaschen und getrocknet.

Man erhält ein rot gefärbtes Polyamid-6,6-Gewebe, das eine reine Nuance und gute Gesamtechtheiten aufweist.

Färbevorschrift II

Man färbt 10 Teile Polyamid-6,6-Gewebe in 500 Teilen einer wässrigen Flotte, die 1 g/l Mononatriumphosphat enthält und mit Dinatriumphosphat auf pH 6 gestellt wird. Der Anteil des Farbstoffes gemäss Beispiel 3 beträgt 1 %, bezogen auf das Fasergewicht. Die Färbedauer bei einer Temperatur von 98° beträgt 30 bis 90 Minuten. Das gefärbte Polyamid-6,6-Gewebe wird anschliessend herausgenommen und wie üblich gewaschen und getrocknet.

Man erhält ein rot gefärbtes Polyamid-6,6-Gewebe, das eine reine Nuance und gute Gesamtechtheiten aufweist.

Färbevorschrift III

Man färbt 10 Teile Wollstück in 500 Teilen einer wässrigen Flotte. Bezogen auf das Fasergewicht betragen die Anteile an Farbstoff 0,45 % gemäss Beispiel 1, an Glaubersalz kalz. 5 % und 80%-iger Essigsäure 2 %. Die Färbedauer bei einer Temperatur von 98° beträgt 30-60 Minuten. Das rot gefärbte, wie üblich gewaschene und getrocknete Wollstück weist sehr gute Allgemeinechtheiten auf.

Färbevorschrift IV

100 Teile Bekleidungsveloursleder werden bei 50° in einer Lösung von 1000 Teilen Wasser und 2 Teilen 24%-igem Ammoniak während 2 Stunden aufgewalkt und anschliessend bei 60° in einer Lösung von 1000 Teilen Wasser, 2 Teilen 24%-igem Ammoniak und 3 Teilen Farbstoff gemäss dem Beispiel 1 während 1 Stunde gefärbt. Hierauf gibt man eine Lösung von 40 Teilen Wasser und 4 Teilen 85%-iger Ameisensäure zu und färbt noch weitere 30 Minuten. Dann werden die Leder gut gespült und gegebenenfalls noch mit 2 Teilen eines Dicyandiamid-Formaldehydkondensationsproduktes während 30 Minuten bei 50° behandelt. Man erhält eine rote Färbung mit guten Echtheiten.

Druckbeispiel (Stoffdruck)

Gewebtes Polyamid 6 oder Polyamid 6.6-Material wird auf einer herkömmlichen Textildruckmaschine mit einer Paste bedruckt, die bezogen auf 1000 g Druckpaste enthält:

a) 20 g des Farbstoffes gemäss Beispiel 1,
b) 50 g Harnstoff,
c) 50 g Thiodiäthylenglykol,
d) 320 g Wasser,
e) 500 g Kernmehl- oder Guarmehlderivat, 10%-ig und
f) 60 g Ammontartrat-Lösung 15 Bè.

Die bedruckte Ware wird im Trockenschrank bei 70 bis 80° getrocknet und dann 20 bis 30 Minuten mit Sattdampf von 101 bis 103° gedämpft. Anschliessend wird die Ware 10 Minuten kalt gespült, 15 Minuten bei 50 bis 60° mit 2 g/l eines synthetischen Waschmittels gewaschen, erneut kalt gespült und dann getrocknet. Man erhält einen gleichmässigen Druck in roter Nuance, mit scharfen Konturen und guten Echtheiten.

Zur Beurteilung der Feinverteilung wird die Druckpaste in verdünnter Form aufgebracht. Das bedruckte Material erweist sich dabei als sprickelfrei.

**Patentansprüche**

**Patentansprüche für folgende Vertragsstaaten : DE, GB, FR, IT, CH, LI, BE**

**1.** Azofarbstoffe der Formel

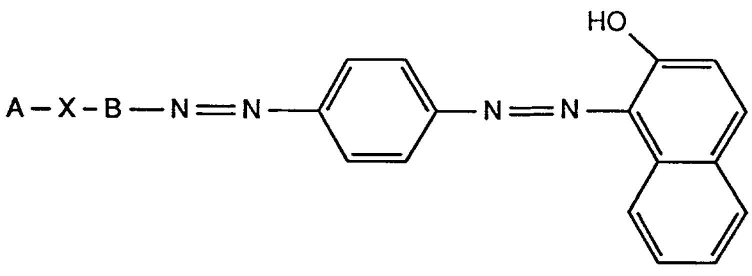

(1),

worin A und B unabhängig voneinander gegebenenfalls substituiertes Phenyl oder Naphthyl sind, X -N-($R_1$)-$SO_2$-, -O-$SO_2$- oder -$SO_2$-N($R_1$)- ist und $R_1$ Wasserstoff oder $C_1$-$C_8$-Alkyl bedeutet, wobei der Farbstoff der Formel (1) eine oder zwei Sulfogruppen enthält, die in den Resten A und/oder B enthalten sind.

**2.** Azofarbstoffe gemäss Anspruch 1, worin A und B unabhängig voneinander gegebenenfalls durch $C_1$-$C_8$-Alkyl, $C_1$-$C_8$-Alkoxy, Halogen, Carboxy, Sulfo, Phenylaminosulfonyl oder Naphthylaminosulfonyl substituiertes Phenyl oder Naphthyl bedeuten, wobei der Phenylaminosulfonyl- und der Naphthylaminosulfonylrest durch $C_1$-$C_8$-Alkyl, $C_1$-$C_8$-Alkoxy, Halogen, Carboxy oder Sulfo weitersubstituiert sein kann.

**3.** Azofarbstoffe gemäss einem der Ansprüche 1 und 2, worin A gegebenenfalls durch $C_1$-$C_4$-Alkyl, $C_1$-$C_4$-Alkoxy, Halogen, Carboxy, Sulfo, Phenylaminosulfonyl oder Naphthylaminosulfonyl substituiertes Phenyl ist, wobei der Phenylaminosulfonyl- und der Naphthylaminosulfonylrest durch $C_1$-$C_8$-Alkyl, $C_1$-$C_8$-Alkoxy, Halogen, Carboxy oder Sulfo weitersubstituiert sein kann.

4. Azofarbstoffe gemäss einem der Ansprüche 1 bis 3, worin B gegebenenfalls durch $C_1$-$C_4$-Alkyl, $C_1$-$C_4$-Alkoxy, Halogen, Carboxy oder Sulfo substituiertes Phenyl ist.

5. Azofarbstoffe gemäss einem der Ansprüche 1 bis 4, worin A gegebenenfalls durch $C_1$-$C_4$-Alkyl, $C_1$-$C_4$-Alkoxy, Halogen, Carboxy, Sulfo, Phenylaminosulfonyl oder Naphthylaminosulfonyl substituiertes Phenyl ist, wobei der Phenylaminosulfonyl- und der Naphthylaminosulfonylrest durch $C_1$-$C_8$-Alkyl, $C_1$-$C_8$-Alkoxy, Halogen, Carboxy oder Sulfo weitersubstituiert sein kann, und B gegebenenfalls durch $C_1$-$C_4$-Alkyl, $C_1$-$C_4$-Alkoxy, Halogen, Carboxy oder Sulfo substituiertes Phenyl ist.

6. Azofarbstoffe gemäss einem der Ansprüche 1 bis 5, worin der Farbstoff der Formel (1) nur eine Sulfogruppe enthält.

7. Azofarbstoffe gemäss einem der Ansprüche 1 bis 6, worin X -$N(R_1)$-$SO_2$- und $R_1$ Wasserstoff oder $C_1$-$C_4$-Alkyl, insbesondere Wasserstoff, bedeutet.

8. Azofarbstoffe gemäss einem der Ansprüche 1 bis 7 der Formel

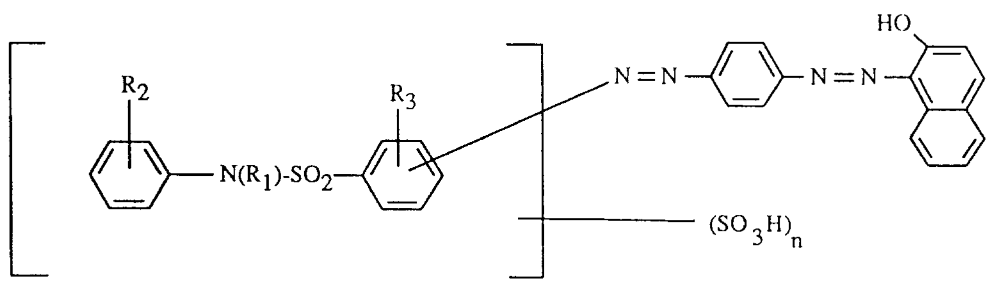

(2),

worin $R_1$ Wasserstoff oder $C_1$-$C_4$-Alkyl, insbesondere Wasserstoff, $R_2$ $C_1$-$C_4$-Alkyl, $C_1$-$C_4$-Alkoxy, Halogen, Carboxy oder gegebenenfalls durch Sulfo substituiertes Phenylaminosulfonyl oder Naphthylaminosulfonyl, $R_3$ $C_1$-$C_4$-Alkyl, $C_1$-$C_4$-Alkoxy, Halogen oder Carboxy und n die Zahl 1 oder 2 bedeutet.

9. Azofarbstoffe gemäss einem der Ansprüche 1 bis 8 der Formel

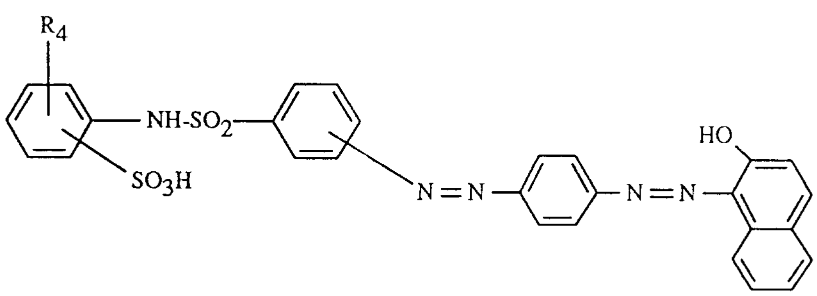

(3),

worin $R_4$ Wasserstoff oder Methyl, insbesondere Wasserstoff, ist.

10. Farbstoffmischungen, dadurch gekennzeichnet, dass sie mindestens zwei Azofarbstoffe der Formel

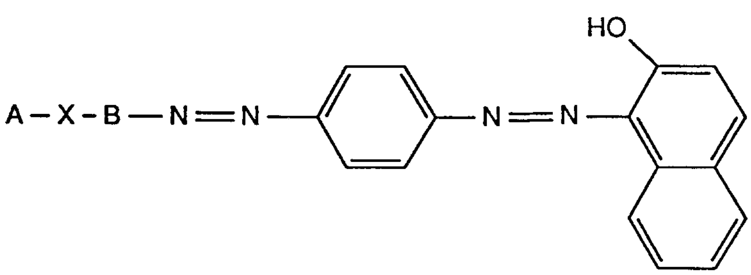

(1)

enthalten, worin A und B unabhängig voneinander gegebenenfalls substituiertes Phenyl oder Naphthyl sind, X $-N(R_1)-SO_2-$, $-O-SO_2-$ oder $-SO_2-N(R_1)-$ ist und $R_1$ Wasserstoff oder $C_1$-$C_8$-Alkyl bedeutet, wobei die Farbstoffe der Formel (1) eine oder zwei Sulfogruppen enthalten, die in den Resten A und/oder B enthalten sind.

**11.** Verfahren zur Herstellung von Azofarbstoffen gemäss Anspruch 1, dadurch gekennzeichnet, dass man ein Amin der Formel

$A-X-B-NH_2$ (4),

worin A, B und X die in Anspruch 1 angegebenen Bedeutungen haben, diazotiert und auf eine Verbindung der Formel

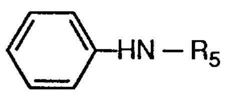

(5),

worin $R_5$ Wasserstoff oder $-CH_2-SO_3H$ ist, kuppelt, und das so erhaltene Produkt, falls $R_5$ $-CH_2SO_3H$ ist, zur Verbindung der Formel

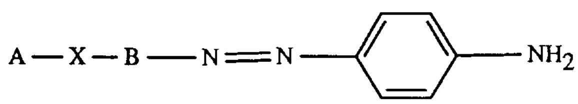

(6)

umsetzt, die Verbindung der Formel (6) diazotiert und auf eine Verbindung der Formel

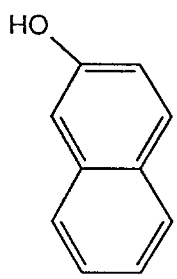

(7)

kuppelt.

**12.** Verwendung der Azofarbstoffe gemäss den Ansprüchen 1 bis 9 bzw. der Farbstoffmischungen gemäss Anspruch 10 zum Färben und Bedrucken von stickstoffhaltigen oder hydroxygruppenhaltigen Fasermaterialien, Papier oder Leder.

**Patentansprüche für folgenden Vertragsstaat : ES**

1. Verfahren zur Herstellung von Azofarbstoffen der Formel

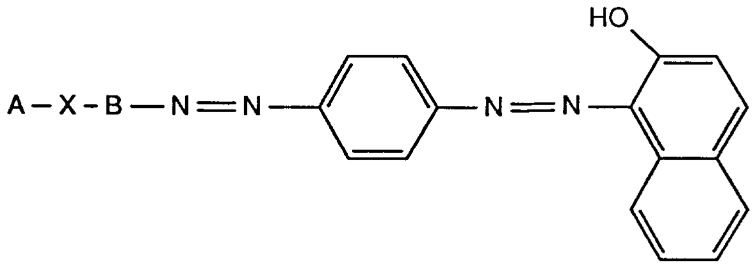

(1),

worin A und B unabhängig voneinander gegebenenfalls substituiertes Phenyl oder Naphthyl sind, X -N-($R_1$)-$SO_2$-, -O-$SO_2$- oder -$SO_2$-N($R_1$)- ist und $R_1$ Wasserstoff oder $C_1$-$C_8$-Alkyl bedeutet, wobei der Farbstoff der Formel (1) eine oder zwei Sulfogruppen enthält, die in den Resten A und/oder B enthalten sind, dadurch gekennzeichnet, dass man ein Amin der Formel

A-X-B-$NH_2$ (4),

worin A, B und X die unter Formel (1) angegebenen Bedeutungen haben, diazotiert und auf eine Verbindung der Formel

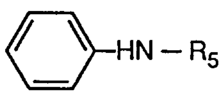

(5),

worin $R_5$ Wasserstoff oder -$CH_2$-$SO_3H$ ist, kuppelt, und das so erhaltene Produkt, falls $R_5$ -$CH_2SO_3H$ ist, zur Verbindung der Formel

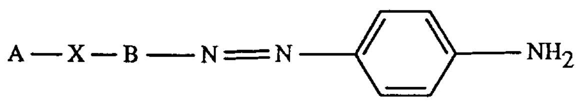

(6)

umsetzt, die Verbindung der Formel (6) diazotiert und auf eine Verbindung der Formel

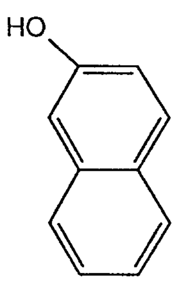

(7)

kuppelt.

2. Verfahren gemäss Anspruch 1, dadurch gekennzeichnet, dass man eine Verbindung der Formel (4) verwendet, worin A und B unabhängig voneinander gegebenenfalls durch $C_1$-$C_8$-Alkyl, $C_1$-$C_8$-Alkoxy, Halogen, Carboxy, Sulfo, Phenylaminosulfonyl oder Naphthylaminosulfonyl substituiertes Phenyl oder Naphthyl bedeuten, wobei der Phenylaminosulfonyl- und der Naphthylaminosulfonylrest durch $C_1$-$C_8$-

Alkyl, $C_1$-$C_8$-Alkoxy, Halogen, Carboxy oder Sulfo weitersubstituiert sein kann.

3. Verfahren gemäss einem der Ansprüche 1 und 2, dadurch gekennzeichnet, dass man eine Verbindung der Formel (4) verwendet, worin A gegebenenfalls durch $C_1$-$C_4$-Alkyl, $C_1$-$C_4$-Alkoxy, Halogen, Carboxy, Sulfo, Phenylaminosulfonyl oder Naphthylaminosulfonyl substituiertes Phenyl ist, wobei der Phenylaminosulfonyl- und der Naphthylaminosulfonylrest durch $C_1$-$C_8$-Alkyl, $C_1$-$C_8$-Alkoxy, Halogen, Carboxy oder Sulfo weitersubstituiert sein kann.

4. Verfahren gemäss einem der Ansprüche 1 bis 3, dadurch gekennzeichnet, dass man eine Verbindung der Formel (4) verwendet, worin B gegebenenfalls durch $C_1$-$C_4$-Alkyl, $C_1$-$C_4$-Alkoxy, Halogen, Carboxy oder Sulfo substituiertes Phenyl ist.

5. Verfahren gemäss einem der Ansprüche 1 bis 4, dadurch gekennzeichnet, dass man eine Verbindung der Formel (4) verwendet, worin A gegebenenfalls durch $C_1$-$C_4$-Alkyl, $C_1$-$C_4$-Alkoxy, Halogen, Carboxy, Sulfo, Phenylaminosulfonyl oder Naphthylaminosulfonyl substituiertes Phenyl ist, wobei der Phenylaminosulfonyl- und der Naphthylaminosulfonylrest durch $C_1$-$C_8$-Alkyl, $C_1$-$C_8$-Alkoxy, Halogen, Carboxy oder Sulfo weitersubstituiert sein kann, und B gegebenenfalls durch $C_1$-$C_4$-Alkyl, $C_1$-$C_4$-Alkoxy, Halogen, Carboxy oder Sulfo substituiertes Phenyl ist.

6. Verfahren gemäss einem der Ansprüche 1 bis 5, dadurch gekennzeichnet, dass man eine Verbindung der Formel (4) verwendet, welche nur eine Sulfogruppe enthält.

7. Verfahren gemäss einem der Ansprüche 1 bis 6, dadurch gekennzeichnet, dass man eine Verbindung der Formel (4) verwendet, worin X -N($R_1$)-$SO_2$- und $R_1$ Wasserstoff oder $C_1$-$C_4$-Alkyl, insbesondere Wasserstoff, bedeutet.

8. Verfahren gemäss einem der Ansprüche 1 bis 7, dadurch gekennzeichnet, dass man eine Verbindung der Formel

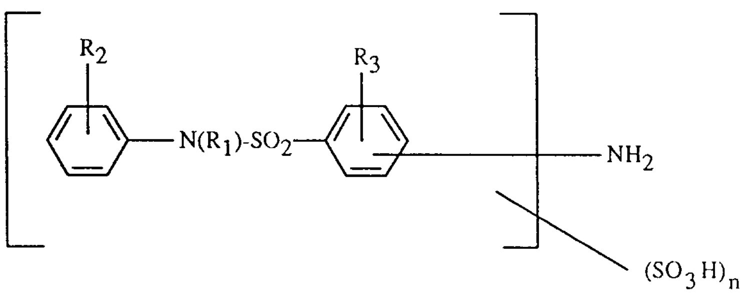

(11),

worin $R_1$ Wasserstoff oder $C_1$-$C_4$-Alkyl, insbesondere Wasserstoff, $R_2$ $C_1$-$C_4$-Alkyl, $C_1$-$C_4$-Alkoxy, Halogen, Carboxy oder gegebenenfalls durch Sulfo substituiertes Phenylaminosulfonyl oder Naphthylaminosulfonyl, $R_3$ $C_1$-$C_4$-Alkyl, $C_1$-$C_4$-Alkoxy, Halogen oder Carboxy und n die Zahl 1 oder 2 bedeutet, auf eine Verbindung der Formel

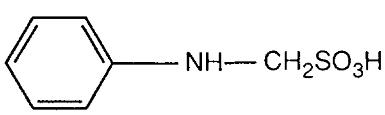

(12)

kuppelt.

9. Verfahren gemäss einem der Ansprüche 1 bis 8, dadurch gekennzeichnet, dass man eine Verbindung der Formel

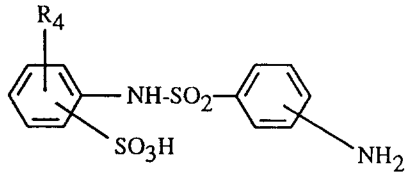

(13),

worin $R_4$ Wasserstoff oder Methyl, insbesondere Wasserstoff, ist, auf eine Verbindung der Formel

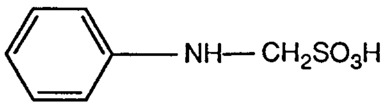

(12)

kuppelt.

**10.** Verfahren zur Herstellung von Farbstoffmischungen, dadurch gekennzeichnet, dass man mindestens zwei gemäss Anspruch 1 hergestellte Azofarbstoffe der Formel

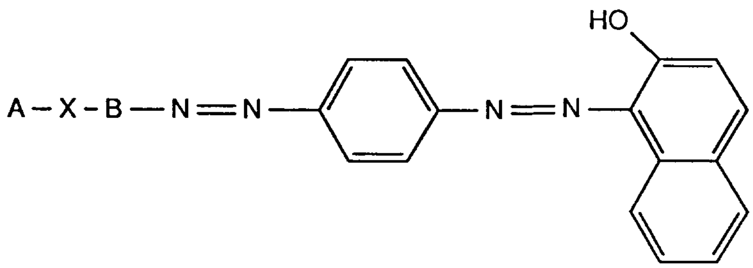

(1),

worin A und B unabhängig voneinander gegebenenfalls substituiertes Phenyl oder Naphthyl sind, X $-N(R_1)-SO_2-$, $-O-SO_2-$ oder $-SO_2-N(R_1)-$ ist und $R_1$ Wasserstoff oder $C_1$-$C_8$-Alkyl bedeutet, wobei die Farbstoffe der Formel (1) eine oder zwei Sulfogruppen enthalten, die in den Resten A und/oder B enthalten sind, mischt.

**11.** Verwendung der gemäss den Ansprüchen 1 bis 9 hergestellten Azofarbstoffe bzw. der gemäss Anspruch 10 hergestellten Farbstoffmischungen zum Färben und Bedrucken von stickstoffhaltigen oder hydroxygruppenhaltigen Fasermaterialien, Papier oder Leder.

**Claims**
**Claims for the following Contracting States: DE, GB, FR, IT, CH, LI, BE**

**1.** An azo dye of the formula

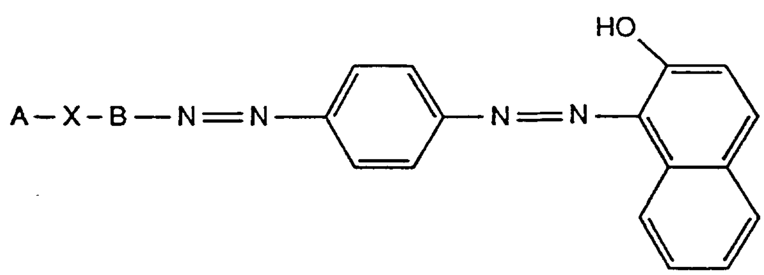

(1),

where A and B are each independently of the other substituted or unsubstituted phenyl or naphthyl, X is $-N(R_1)-SO_2-$, $-O-SO_2-$ or $-SO_2N(R_1)-$and $R_1$ is hydrogen or $C_1$-$C_8$alkyl, the dye of the formula (1) containing one or two sulfo groups which are present in the radicals A and/or B.

2. An azo dye according to claim 1, wherein A and B are each independently of the other phenyl or naphthyl which may each be substituted by $C_1$-$C_8$alkyl, $C_1$-$C_8$alkoxy, halogen, carboxyl, sulfo or a phenylaminosulfonyl or naphthylaminosulfonyl radical which may in turn be further substituted by $C_1$-$C_8$alkyl, $C_1$-$C_8$alkoxy, halogen, carboxyl or sulfo.

3. An azo dye according to either of claims 1 and 2, wherein A is phenyl which may be substituted by $C_1$-$C_4$alkyl, $C_1$-$C_4$alkoxy, halogen, carboxyl, sulfo or a phenylaminosulfonyl or naphthylaminosulfonyl radical which may in turn be further substituted by $C_1$-$C_8$alkyl, $C_1$-$C_8$alkoxy, halogen, carboxyl or sulfo.

4. An azo dye according to any one of claims 1 to 3, wherein B is unsubstituted or $C_1$-$C_4$alkyl-, $C_1$-$C_4$alkoxy-, halogen-, carboxyl- or sulfo-substituted phenyl.

5. An azo dye according to any one of claims 1 to 4, wherein A is phenyl which may be substituted by $C_1$-$C_4$alkyl, $C_1$-$C_4$alkoxy, halogen, carboxyl, sulfo or a phenylaminosulfonyl or naphthylaminosulfonyl radical which may in turn be further substituted by $C_1$-$C_8$alkyl, $C_1$-$C_8$alkoxy, halogen, carboxyl or sulfo, and B is unsubstituted or $C_1$-$C_4$alkyl-, $C_1$-$C_4$alkoxy-, halogen-, carboxyl- or sulfo-substituted phenyl.

6. An azo dye according to any one of claims 1 to 5, wherein the dye of the formula (1) contains only one sulfo group.

7. An azo dye according to any one of claims 1 to 6, wherein X is $-N(R_1)-SO_2-$ and $R_1$ is hydrogen or $C_1$-$C_4$alkyl, in particular hydrogen.

8. An azo dye according to any one of claims 1 to 7 of the formula

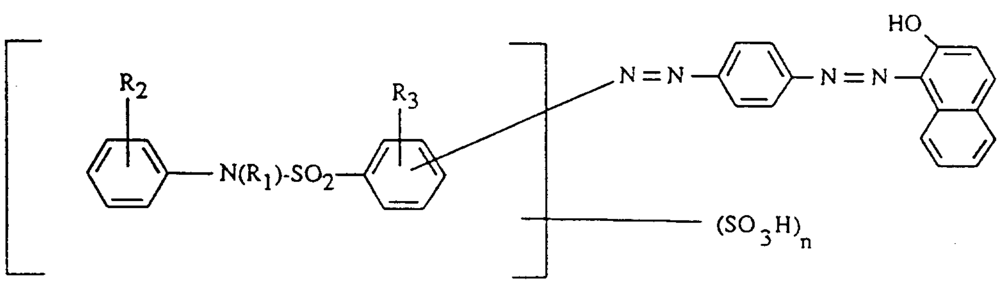

(2),

where $R_1$ is hydrogen or $C_1$-$C_4$alkyl, in particular hydrogen, $R_2$ is $C_1$-$C_4$alkyl, $C_1$-$C_4$alkoxy, halogen, carboxyl or unsubstituted or sulfo-substituted phenylaminosulfonyl or naphthylaminosulfonyl, $R_3$ is $C_1$-$C_4$alkyl, $C_1$-$C_4$alkoxy, halogen or carboxyl, and n is 1 or 2.

9. An azo dye according to any one of claims 1 to 8 of the formula

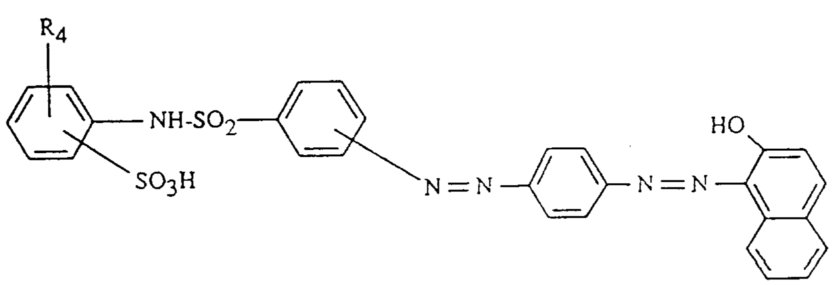

(3),

where $R_4$ is hydrogen or methyl, in particular hydrogen.

**10.** A dye mixture, containing at least two azo dyes of the formula

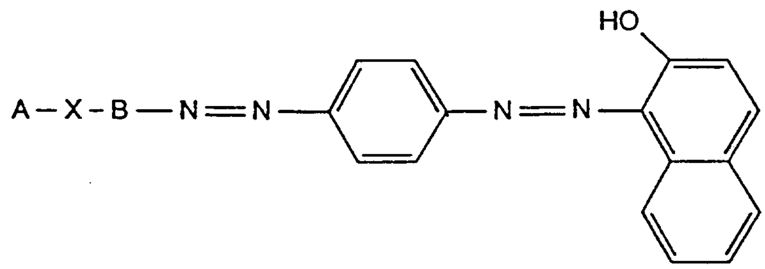

(1),

where A and B are each independently of the other substituted or unsubstituted phenyl or naphthyl, X is $-N(R_1)-SO_2-$, $-O-SO_2-$ or $-SO_2-N(R_1)-$and $R_1$ is hydrogen or $C_1$-$C_8$alkyl, the dye of the formula (1) containing one or two sulfo groups which are present in the radicals A and/or B.

**11.** A process for preparing an azo dye according to claim 1, which comprises diazotising an amine of the formula

A-X-B-$NH_2$ (4),

where A, B and X are each as defined in claim 1, coupling the diazonium salt with a compound of the formula

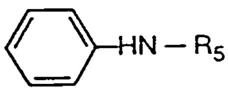

(5)

where $R_5$ is hydrogen or $-CH_2-SO_3H$, converting the resulting product if $R_5$ is $-CH_2-SO_3H$ to the compound of the formula

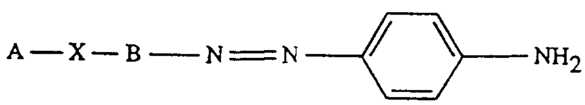

(6)

diazotising the compound of the formula (6) and coupling the diazonium salt with a compound of the formula

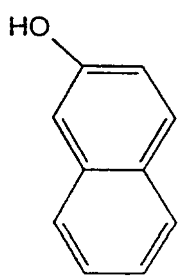

(7).

**12.** The use of an azo dye according to any one of claims 1 to 9 or of a dye mixture according to claim 10, for dyeing and printing nitrogen-containing or hydroxyl-containing fibre materials, paper or leather.

**Claims for the following Contracting State : ES**

1. A process for preparing an azo dye of the formula

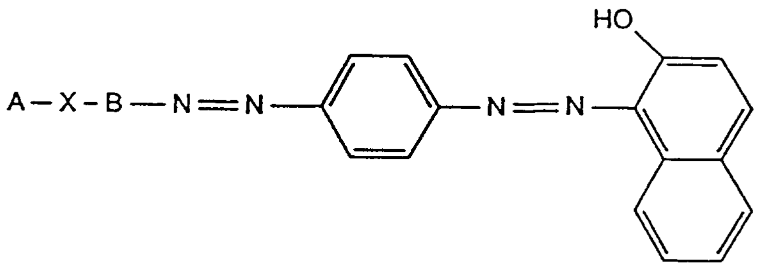

(1),

where A and B are each independently of the other substituted or unsubstituted phenyl or naphthyl, X is $-N(R_1)-SO_2-$, $-O-SO_2-$ or $-SO_2-N(R_1)-$and $R_1$ is hydrogen or $C_1$-$C_8$alkyl, the dye of the formula (1) containing one or two sulfo groups which are present in the radicals A and/or B, which comprises diazotising an amine of the formula

$A-X-B-NH_2$ (4),

where A, B and X are each as defined for the formula (1), coupling the diazonium salt with a compound of the formula

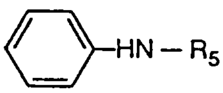

(5)

where $R_5$ is hydrogen or $-CH_2-SO_3H$, converting the resulting product if $R_5$ is $-CH_2-SO_3H$ to the compound of the formula

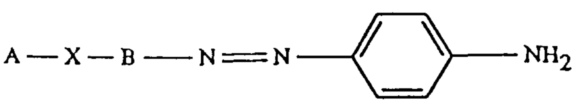

(6)

diazotising the compound of the formula (6) and coupling the diazonium salt with a compound of the formula

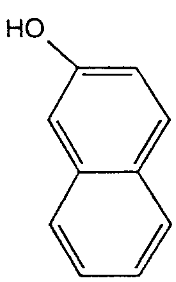

(7).

2. A process according to claim 1, wherein, in the compound of the formula (4), A and B are each independently of the other phenyl or naphthyl which may each be substituted by $C_1$-$C_8$alkyl, $C_1$-$C_8$alkoxy, halogen, carboxyl, sulfo or a phenylaminosulfonyl or naphthylaminosulfonyl radical which may in turn be further substituted by $C_1$-$C_8$alkyl, $C_1$-$C_8$alkoxy, halogen, carboxyl or sulfo.

3. A process according to either of claims 1 and 2, wherein, in the compound of the formula (4), A is phenyl which may be substituted by $C_1$-$C_4$alkyl, $C_1$-$C_4$alkoxy, halogen, carboxyl, sulfo or a Phenylaminosulfonyl or naphthylaminosulfonyl radical which may in turn be further substituted by $C_1$-$C_8$alkyl, $C_1$-$C_8$alkoxy, halogen, carboxyl or sulfo.

4. A process according to any one of claims 1 to 3, wherein, in the compound of the formula (4), B is unsubstituted or $C_1$-$C_4$alkyl-, $C_1$-$C_4$alkoxy-, halogen-, carboxyl- or sulfo-substituted phenyl.

5. A process according to any one of claims 1 to 4, wherein, in the compound of the formula (4), A is phenyl which may be substituted by $C_1$-$C_4$alkyl, $C_1$-$C_4$alkoxy, halogen, carboxyl, sulfo or a phenylaminosulfonyl or naphthylaminosulfonyl radical which may in turn be further substituted by $C_1$-$C_8$alkyl, $C_1$-$C_8$alkoxy, halogen, carboxyl or sulfo, and B is unsubstituted or $C_1$-$C_4$alkyl-, $C_1$-$C_4$alkoxy-, halogen-, carboxyl- or sulfo-substituted phenyl.

6. A process according to any one of claims 1 to 5, wherein the compound of the formula (4) contains only one sulfo group.

7. A process according to any one of claims 1 to 6, wherein, in the compound of the formula (4), X is -N-($R_1$)-$SO_2$- and $R_1$ is hydrogen or $C_1$-$C_4$alkyl, in particular hydrogen.

8. A process according to any one of claims 1 to 7, wherein a compound of the formula

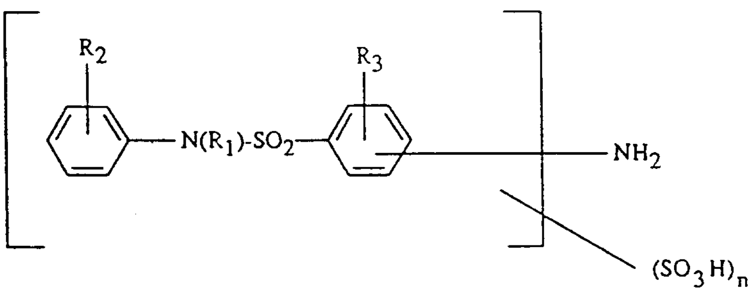

(11),

where $R_1$ is hydrogen or $C_1$-$C_4$alkyl, in particular hydrogen, $R_2$ is $C_1$-$C_4$alkyl, $C_1$-$C_4$alkoxy, halogen, carboxyl or unsubstituted or sulfo-substituted phenylaminosulfonyl or naphthylaminosulfonyl, $R_3$ is $C_1$-$C_4$alkyl, $C_1$-$C_4$alkoxy, halogen or carboxyl, and n is 1 or 2, is coupled with a compound of the formula

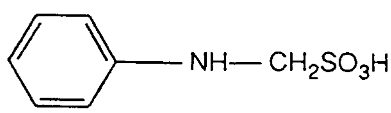

(12).

9. A process according to any one of claims 1 to 8, wherein a compound of the formula

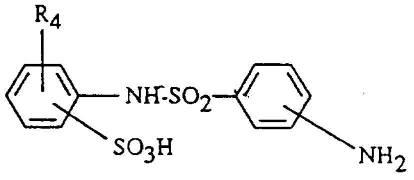

(13),

where $R_4$ is hydrogen or methyl, in particular hydrogen, is coupled with a compound of the formula

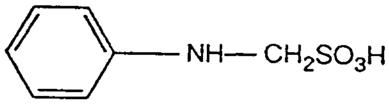

(12).

**10.** A method of preparing a dye mixture, which comprises mixing at least two azo dyes prepared according to claim 1, of the formula

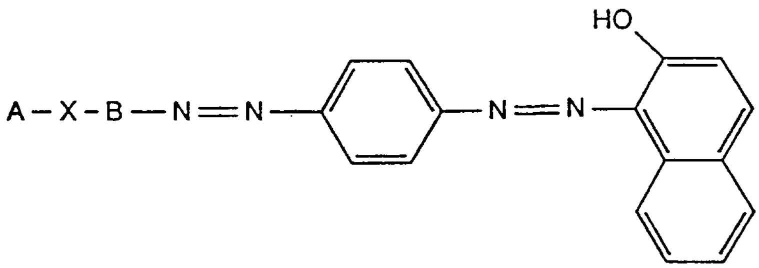

(1),

where A and B are each independently of the other substituted or unsubstituted phenyl or naphthyl, X is $-N(R_1)-SO_2-$, $-O-SO_2-$ or $-SO_2-N(R_1)-$and $R_1$ is hydrogen or $C_1$-$C_8$alkyl, the dye of the formula (1) containing one or two sulfo groups which are present in the radicals A and/or B.

**11.** The use of an azo dye prepared according to any one of claims 1 to 9 or of a dye mixture prepared according to claim 10, for dyeing and printing nitrogen-containing or hydroxyl-containing fibre materials, paper or leather.

**Revendications**
**Revendications pour les Etats contractants suivants : DE, GB, FR, IT, CH, LI, BE**

**1.** Colorants azoïques de formule

(1)

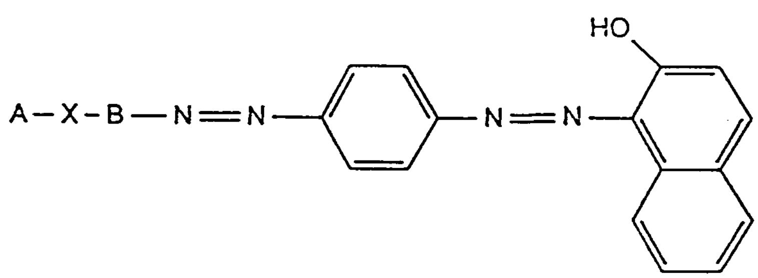

dans laquelle A et B représentent indépendamment l'un de l'autre un groupe phényle ou naphtyle éventuellement substitués, X représente un groupe $-N(R_1)-SO_2-$, $-O-SO_2-$ ou $-SO_2-N(R_1)-$ et $R_1$ représente un atome d'hydrogène ou un groupe alkyle en $C_{1-8}$, le colorant de formule (1) contenant un ou deux groupes sulfo situés sur des résidus A et/ou B.

**2.** Colorants azoïques conformes à la revendication 1 dans lesquels A et B représentent indépendamment l'un de l'autre un groupe phényle ou naphtyle substitués par un résidu alkyle en $C_{1-8}$, alcoxy en $C_{1-8}$, halogéno, carboxy, sulfo, phénylaminosulfonyle ou naphtylaminosulfonyle, les résidus phénylaminosulfonyle et naphtylaminosulfonyle pouvant être substitués à leur tour par un groupe alkyle en $C_{1-8}$, alcoxy en $C_{1-8}$, halogéno, carboxy ou sulfo.

**3.** Colorants azoïques conformes à une des revendications 1 et 2 dans lesquels A représente un groupe phényle éventuellement substitué par un groupe alkyle en $C_{1-4}$, alcoxy en $C_{1-4}$, halogéno, carboxy, sulfo, phénylaminosulfonyle ou naphtylaminosulfonyle, les résidus phénylaminosulfonyle et naphtylaminosulfonyle pouvant être substitués à leur par un groupe alkyle en $C_{1-8}$, alcoxy en $C_{1-8}$, halogéno carboxy ou sulfo.

**4.** Colorants azoïques conformes à une des revendications 1 à 3 dans lesquels B représente un groupe phényle éventuellement substitué par un groupe alkyle en $C_{1-4}$, alcoxy en $C_{1-4}$, halogéno, carboxy ou sulfo.

**5.** Colorants azoïques conformes à une des revendications 1 à 4, dans lesquels A représente un groupe phényle éventuellement substitué par un groupe alkyle en $C_{1-4}$, alcoxy en $C_{1-4}$, halogéno, carboxy, sulfo, phénylaminosulfonyle ou naphtylaminosulfonyle, les résidus phénylaminosulfonyle et naphtylaminosulfonyle pouvant être substitués à leur tour par un groupe alkyle en $C_{1-8}$, alcoxy en $C_{1-8}$, halogéno, carboxy ou sulfo, et B représente un groupe phényle éventuellement substitué par un groupe alkyle en $C_{1-4}$, alcoxy en $C_{1-4}$, halogéno, carboxy ou sulfo.

**6.** Colorants azoïques conformes à une des revendications 1 à 5 dans lesquels le colorant de formule (1) ne contient qu'un seul groupe sulfo.

**7.** Colorants azoïques conformes à une des revendications 1 à 6 dans lesquels X représente un groupe $-N(R_1)-SO_2-$, et $R_1$ représente un atome d'hydrogène ou un groupe alkyle en $C_{1-4}$, en particulier un atome d'hydrogène.

**8.** Colorants azoïques conformes à une des revendications 1 à 7 de formule

(2)

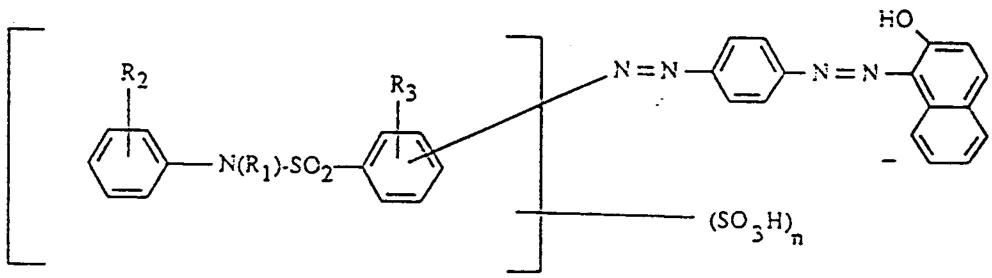

dans laquelle $R_1$ représente un atome d'hydrogène ou un groupe alkyle en $C_{1-4}$, en particulier un atome d'hydrogène, $R_2$ représente un groupe alkyle en $C_{1-4}$, alcoxy en $C_{1-4}$, halogéno, carboxy, phénylaminosulfonyle ou naphtylaminosulfonyle éventuellement substitué par un groupe sulfo, $R_3$ représente un groupe alkyle en $C_{1-4}$, alcoxy en $C_{1-4}$, halogéno ou carboxy, et n vaut 1 ou 2.

**9.** Colorants azoïques conformes à une des revendication 1 à 8 de formule

(3)

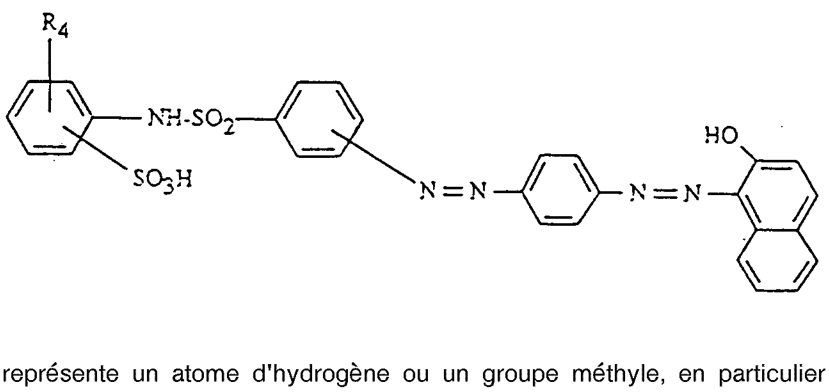

dans laquelle $R_4$ représente un atome d'hydrogène ou un groupe méthyle, en particulier un atome d'hydrogène.

**10.** Mélanges de colorants, caractérisés en ce qu'ils contiennent au moins deux colorants de formule

(1) 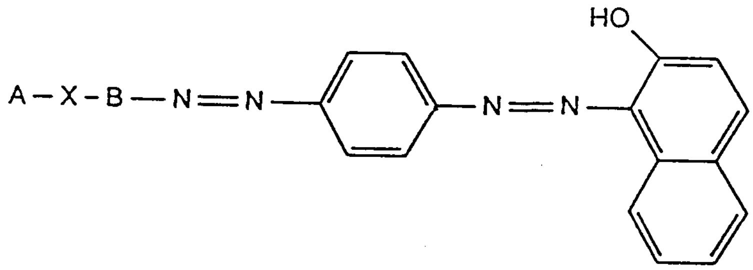

dans laquelle A et B représentent indépendamment l'un de l'autre un groupe phényle ou naphtyle éventuellement substitués, X représente un groupe $-N(R_1)-SO_2-$, $-O-SO_2-$ ou $-SO_2-N(R_1)-$ et $R_1$ représente un atome d'hydrogène ou un groupe alkyle en $C_{1-8}$, les colorants de formule (1) contenant un ou deux groupes sulfo situés sur des résidus A et/ou B.

**11.** Procédé pour la préparation de colorants azoïques conformes à la revendication 1, caractérisé en ce que l'on procède à la diazotation d'une amine de formule

(4) $A-X-B-NH_2$

dans laquelle A, B et X ont la signification indiquée dans la revendication 1, en ce que l'on copule ce produit diazoté sur un composé de formule

(5) 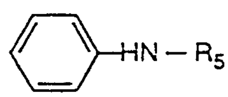

dans laquelle $R_5$ représente un atome d'hydrogène ou un groupe $-CH_2-SO_3H$, et, dans le cas où $R_5$ représente un groupe $-CH_2SO_3H$, en ce que l'on convertit le produit ainsi obtenu en un composé de formule

(6) 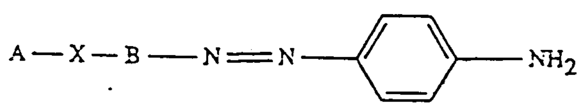

en ce que l'on effectue la diazotation du composé de formule (6) que l'on copule ensuite sur un composé de formule

(7) 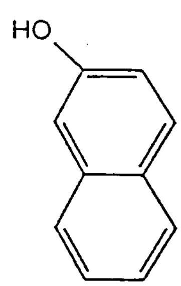

**12.** Utilisation des colorants azoïques conformes aux revendications 1 à 9 ou des mélanges de colorants conformes à la revendication 10 pour la teinture et l'impression de matériaux fibreux contenant des atomes d'azote ou des groupes hydroxyle, de papier ou de cuir.

**Revendications pour l'Etat contractant suivant : ES**

1. Procédé pour préparer des colorants azoïques de formule

(1) 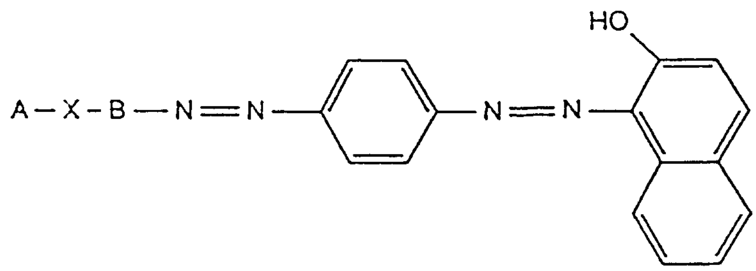

dans laquelle A et B représentent indépendamment l'un de l'autre un groupe phényle ou naphtyle éventuellement substitués, X représente un groupe $-N(R_1)-SO_2-$, $-O-SO_2-$ ou $-SO_2-N(R_1)-$ et $R_1$ représente un atome d'hydrogène ou un groupe alkyle en $C_{1-8}$, le colorant de formule (1) contenant un ou deux groupes sulfo situés sur des résidus A et/ou B, caractérisé en ce que l'on procède à la diazotation d'une amine de formule

(4) $A\text{-}X\text{-}B\text{-}NH_2$

dans laquelle A, B et X ont la signification indiquée pour la formule (1), en ce que l'on copule ce produit diazoté sur un composé de formule

(5) 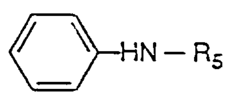

dans laquelle $R_5$ représente un atome d'hydrogène ou un groupe $-CH_2-SO_3H$, et, dans le cas où $R_5$ représente un groupe $-CH_2SO_3H$, en ce que l'on convertit le produit ainsi obtenu en un composé de formule

(6) 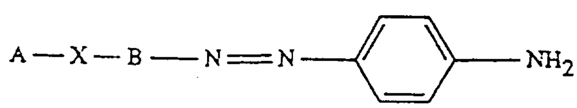

en ce que effectue la diazotation du composé de formule (6) que l'on copule ensuite sur un composé de formule

(7) 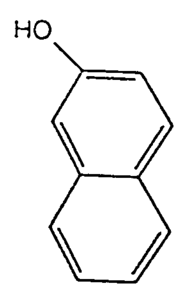

2. Procédé conforme à la revendication 1, caractérisé en ce que l'on utilise un composé de formule (4) dans laquelle A et B représentent indépendamment l'un de l'autre un groupe phényle ou naphtyle substitués par un résidu alkyle en $C_{1-8}$, alcoxy en $C_{1-8}$, halogéno, carboxy, sulfo, phénylaminosulfony-

le ou naphtylaminosulfonyle, les résidus phénylaminosulfonyle et naphtylaminosulfonyle pouvant être substitués à leur tour par un groupe alkyle en $C_{1-8}$, alcoxy en $C_{1-8}$, halogéno, carboxy ou sulfo.

**3.** Procédé conforme à une des revendications 1 ou 2, caractérisé en ce que l'on utilise un composé de formule (4) dans laquelle A représente un groupe phényle éventuellement substitué par un groupe alkyle en $C_{1-4}$, alcoxy en $C_{1-4}$, halogéno, carboxy, sulfo, phénylaminosulfonyle ou naphtylaminosulfonyle, les résidus phénylaminosulfonyle et naphtylaminosulfonyle pouvant être substitués à leur par un groupe alkyle en $C_{1-8}$, alcoxy en $C_{1-8}$, halogéno carboxy ou sulfo.

**4.** Procédé conforme à une des revendications 1 à 3, caractérisé en ce que l'on utilise un composé de formule (4) dans laquelle B représente un groupe phényle éventuellement substitué par un groupe alkyle en $C_{1-4}$, alcoxy en $C_{1-4}$, halogéno, carboxy ou sulfo.

**5.** Procédé conforme à une des revendications 1 à 4, caractérisé en ce que l'on utilise un composé de formule (4) dans laquelle A représente un groupe phényle éventuellement substitué par un groupe alkyle en $C_{1-4}$, alcoxy en $C_{1-4}$, halogéno, carboxy, sulfo, phénylaminosulfonyle ou naphtylaminosulfonyle, les résidus phénylaminosulfonyle et naphtylaminosulfonyle pouvant être substitués à leur tour par un groupe alkyle en $C_{1-8}$, alcoxy en $C_{1-8}$, halogéno, carboxy ou sulfo, et B représente un groupe phényle éventuellement substitué par un groupe alkyle en $C_{1-4}$, alcoxy en $C_{1-4}$, halogéno, carboxy ou sulfo.

**6.** Procédé conforme à une des revendications 1 à 5, caractérisé en ce que l'on utilise un composé de formule (4) ne contenant qu'un seul groupe sulfo.

**7.** Procédé conforme à une des revendications 1 à 6, caractérisé en ce que l'on utilise un composé de formule (4) dans laquelle X représente un groupe $-N(R_1)-SO_2-$, et $R_1$ représente un atome d'hydrogène ou un groupe alkyle en $C_{1-4}$, en particulier un atome d'hydrogène.

**8.** Procédé conforme à une des revendications 1 à 7 , caractérisé en ce que l'on copule un composé de formule

(11) 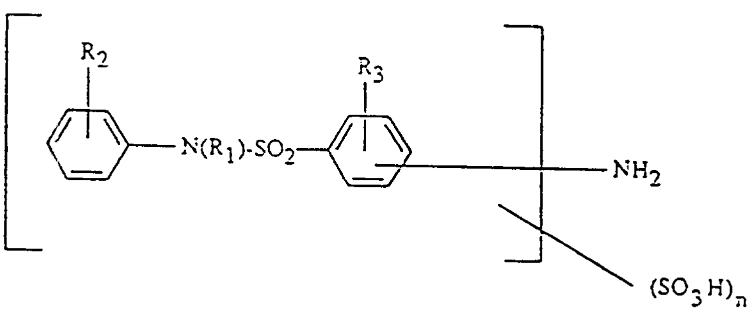

dans laquelle $R_1$ représente un atome d'hydrogène ou un groupe alkyle en $C_{1-4}$, en particulier un atome d'hydrogène, $R_2$ représente un groupe alkyle en $C_{1-4}$, alcoxy en $C_{1-4}$, halogéno, carboxy, phénylaminosulfonyle ou naphtylaminosulfonyle éventuellement substitué par un groupe sulfo, $R_3$ représente un groupe alkyle en $C_{1-4}$, alcoxy en $C_{1-4}$, halogéno ou carboxy, et n vaut 1 ou 2, sur un composé de formule

(12) 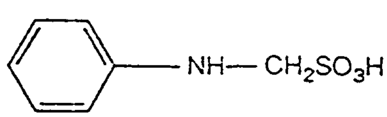

**9.** Procédé conforme à une des revendications 1 à 8, caractérisé en ce que l'on copule un composé de formule

(13) 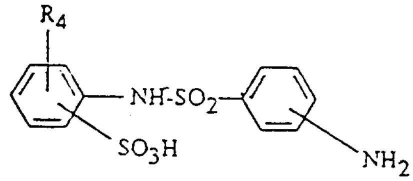

dans laquelle $R_4$ représente un atome d'hydrogène ou un groupe méthyle, en particulier un atome d'hydrogène sur un composé de formule

(12) 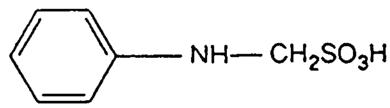

**10.** Procédé pour la préparation de mélanges de colorants, caractérisé en ce que l'on mélange au moins deux colorants azoïques de formule

(1) 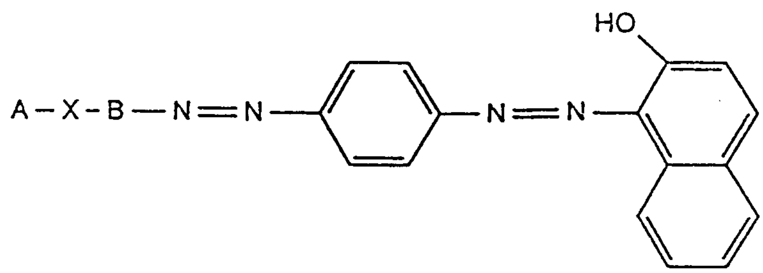

dans laquelle A et B représentent indépendamment l'un de l'autre un groupe phényle ou naphtyle éventuellement substitués, X représente un groupe $-N(R_1)-SO_2-$, $-O-SO_2-$ ou $-SO_2-N(R_1)-$ et $R_1$ représente un atome d'hydrogène ou un groupe alkyle en $C_{1-8}$, le colorant de formule (1) contenant un ou deux groupes sulfo situés sur des résidus A et/ou B.

**11.** Utilisation des colorants azoïques préparés conformément aux revendications 1 à 9 ou des mélanges de colorants préparés conformément à la revendication 10 pour la teinture et l'impression de matériaux fibreux contenant des atomes d'azote ou des groupes hydroxyle, de papier ou de cuir.